# EUROPEAN PATENT APPLICATION

(11) **EP 4 831 228 A1**
(43) Date of publication of application: **28.10.2026**
(21) Application number: 24907472.5
(22) Date of filing: 18.12.2024
(51) Int. Cl.: C08J 9/16

(54) **POLYOLEFIN-BASED RESIN FOAMED PARTICLES AND FOAMED PARTICLE MOLDED ARTICLE**

(30) Priority: 21.12.2023 JP 2023216179
(71) Applicant: JSP Corporation, Tokyo 100-0005 (JP); JSP International SARL, 60190 Estrées-Saint-Denis (FR)
(72) Inventor: VEDIE, Laurianne, 60190 Estrees-Saint-Denis (FR); TROUILLET, Christophe, 60190 Estrees-Saint-Denis (FR); KOPF, Valentin, 60190 Estrees-Saint-Denis (FR); HIRA, Akinobu, Kanuma-shi, Tochigi 322-0014 (JP)
(74) Representative: Hafner & Kohl PartmbB
(86) International application number: PCT/JP2024/044873
(87) International publication number: WO 2025/135088

(57) **Abstract**

Polyolefin-based resin expanded beads are provided that enable easy in-mold molding of a polyolefin-based resin expanded beads molded article that exhibits high flame retardancy and has an excellent fusion-bonding property and an excellent surface property.

The polyolefin-based resin expanded beads are polyolefin-based resin expanded beads including a foamed layer, the foamed layer contains a base material resin, a phosphonate ester-based compound, and a NOR type hindered amine-based compound, the base material resin is constituted of a polyolefin-based resin, the amount of the phosphonate ester-based compound blended in the foamed layer is 5 parts by mass or more and 25 parts by mass or less with respect to 100 parts by mass of the base material resin, the amount of the NOR type hindered amine-based compound blended in the foamed layer is 0.3 parts by mass or more and 5 parts by mass or less with respect to 100 parts by mass of the base material resin, and the expanded beads have a closed cell rate of 60% or more.

## Description

### Technical Field

The present invention relates to polyolefin-based resin expanded beads and an expanded beads molded article that have flame retardancy.

### Background Art

Polyolefin-based resin expanded beads are widely used as a material for in-mold molding of a polyolefin-based resin expanded beads molded article.
The polyolefin-based resin expanded beads molded article is used for various applications, for example, as a packaging material, a member for vehicles, or a building material. From the viewpoint of having excellent properties represented by a lightweight property, impact resistance, and an energy absorption property, the polyolefin-based resin expanded beads molded article is particularly suitable as a member for vehicles that is exemplified by a bumper for automobiles and a seat core material.

Conventionally, the member for vehicles may be required to satisfy the FMVSS 302 standard (Federal Motor Vehicle Safety Standard No. 302). However, recent spread of electric vehicles, and the like, may require the member for vehicles to have a low combustion speed, and in addition, higher flame retardancy exemplified by a self-extinguishing property.

For example, Patent Literature 1 proposes polypropylene-based resin expanded beads (hereinafter, also referred to as prior art 1) containing a polypropylene-based resin, an organic phosphorus-based compound, and a hindered amine in a predetermined range. Patent Literature 2 proposes polyolefin-based resin pre-expanded beads (hereinafter, also referred to as prior art 2) containing a specific organic phosphorus-based compound and a specific hindered amine in a predetermined range. The both of Patent Literature 1 and Patent Literature 2 describe that an expanded beads molded article excellent in flame retardancy can be provided by using the proposed expanded beads.

### Citation List

### Patent Literature

Patent Literature 1: WO2022/203035A1
Patent Literature 2: WO2016/052739A1

### Summary of Invention

### Technical Problem

However, studies of the present inventors have revealed that the prior arts 1 and 2 have the following problems.

That is, it has been found that in each of the prior arts 1 and 2, the organic phosphorus-based compound and the hindered amine are contained in a predetermined range and thus the flame retardancy is improved but there may be problems of an insufficient fusion-bonding property between the expanded beads at the time of producing the expanded beads molded article by in-mold molding and an insufficient surface property of the produced expanded beads molded article. Hereinafter, the fusion-bonding property and the surface property of an expanded beads molded article may be collectively referred to as "molded state".

The present invention has been made in view of the above problems. That is, the present invention provides polyolefin-based resin expanded beads enabling easy in-mold molding of a polyolefin-based resin expanded beads molded article that exhibits high flame retardancy and is in an excellent molded state, and a polyolefin-based resin expanded beads molded article in an excellent molded state.

### Solution to Problem

The polyolefin-based resin expanded beads of the present invention are polyolefin-based resin expanded beads including a foamed layer, and the foamed layer includes a base material resin constituted of a polyolefin-based resin and contains a phosphonate ester-based compound and a NOR type hindered amine-based compound, the amount of the phosphonate ester-based compound blended in the foamed layer is 5 parts by mass or more and 25 parts by mass or less with respect to 100 parts by mass of the base material resin, the amount of the NOR type hindered amine-based compound blended in the foamed layer is 0.3 parts by mass or more and 5 parts by mass or less with respect to 100 parts by mass of the resin, and the polyolefin-based resin expanded beads have a closed cell rate of 60% or more.

The polyolefin-based resin expanded beads molded article of the present invention is constituted by in-mold molding of the polyolefin-based resin expanded beads of the present invention.

### Advantageous Effects of Invention

The present invention can provide polyolefin-based resin expanded beads enabling production of a polyolefin-based resin expanded beads molded article that exhibits high flame retardancy and is in an excellent molded state. The polyolefin-based resin expanded beads molded article of the present invention exhibits high flame retardancy, and is in an excellent molded state of the fusion-bonding property and the surface property.

### Description of Embodiments

Hereinafter, the polyolefin-based resin expanded beads of the present invention will be described. In the following description, the polyolefin-based resin expanded beads of the present invention may be referred to as expanded beads of the present invention or simply referred to as expanded beads, and the polyolefin-based resin expanded beads molded article of the present invention may be referred to as the expanded beads molded article of the present invention or simply referred to as expanded beads molded article.

In the description below, a preferred numerical range of the present invention may be appropriately indicated. In this case, a preferred range, a more preferred range, and a particularly preferred range can be determined, regarding the upper limit and the lower limit of the numerical range, from all combinations of the upper limit and the lower limit.

The high flame retardancy in the present invention means that not only the combustion speed is slow but also a self-extinguishing property is exhibited. In the present invention, the self-extinguishing property is evaluated in accordance with the criteria of V-0, V-1, and V-2 in a test based on UL 94 (Underwriters Laboratories 94). The expanded beads molded article exhibiting excellent flame retardancy in a test based on the above standard is excellent not only in terms of a slow combustion speed but also in terms of a self-extinguishing property. The expanded beads molded article exhibiting the self-extinguishing property exhibits relatively good flame retardancy even in a test based on another standard. Therefore, expanded beads constituting an expanded beads molded article exhibiting such high flame retardancy and the expanded beads molded article can be used in a wide range of applications.

The expanded beads of the present invention include a foamed layer, and the foamed layer includes a base material resin constituted of a polyolefin-based resin. The foamed layer contains a phosphonate ester-based compound and a NOR type hindered amine-based compound. Thus, desired flame retardancy can be imparted to expanded beads and an expanded beads molded article obtained by in-mold molding of the expanded beads.

The amount of the phosphonate ester-based compound blended in the foamed layer is 5 parts by mass or more and 25 parts by mass or less with respect to 100 parts by mass of the base material resin. The amount of the NOR type hindered amine-based compound blended in the foamed layer is 0.3 parts by mass or more and 5 parts by mass or less with respect to 100 parts by mass of the base material resin.

The expanded beads of the present invention having the above constitution have a closed cell rate of 60% or more. An example of a method of adjusting the closed cell rate to such a preferred range will be described below.

The present inventors have extensively studied for providing expanded beads enabling in-mold molding of an expanded beads molded article in which the problem of deterioration of the molded state is improved while high flame retardancy is exhibited. Then, the present inventors have found that the anticipated problem can be solved as long as the expanded beads contain a phosphonate ester-based compound and a NOR type hindered amine-based compound in a predetermined range and have a closed cell rate of 60% or more, and thus the present invention has been provided.

The causal relationship between the closed cell rate and the occurrence of the above-described problem of deterioration of the molded state is not clear, but is presumed as follows.

First, methods of producing expanded beads containing a polyolefin-based resin, a phosphonate ester-based compound, and a NOR type hindered amine-based compound are generally roughly classified into two. One is a method in which the above-described raw materials are melt-mixed, a blowing agent is further supplied, and the resulting mixture is extruded to form a foam, and then the foam is cut to obtain expanded beads having a predetermined size. Such a method may be referred to as a production method 1 below. The other is a method in which a molten mixture obtained by melt-mixing the above-described raw materials is extruded and cut to prepare resin beads having a predetermined size, and the resin beads are expanded to obtain expanded beads. Such a method may be referred to as a production method 2 below. Both of the two production methods 1 and 2 include a step of melt-mixing the above-described raw materials in an extruder.

In such a series of steps, it is considered that in a molten mixture obtained by melt-mixing a polyolefin-based resin, a phosphonate ester-based compound, and a NOR type hindered amine-based compound, a change in viscosity and an increase in moisture absorption are likely to be caused as compared with a case where a phosphonate ester-based compound and a NOR type hindered amine-based compound are not used.

More specifically, it is presumed that melt-mixing a polyolefin-based resin and a phosphonate ester-based compound increases the moisture absorption of the molten mixture containing the phosphonate ester-based compound. Furthermore, it is considered that melt-mixing a polyolefin-based resin and a NOR type hindered amine-based compound results in generation of a free radical derived from the NOR type hindered amine-based compound, the free radical acts to promote degradation of the polyolefin-based resin, and thus the viscosity of the polyolefin-based resin is changed. It is presumed that the viscosity of the molten mixture containing the polyolefin-based resin having a changed viscosity is changed.

As described above, it has been presumed that using a molten mixture in which an unintended increase in moisture absorption and an unintended change in viscosity are caused makes it difficult to form a cell and a cell film at the time of expansion and thus the resulting expanded beads have a low closed cell rate. As a result, it has been presumed that the fusion-bonding property between the expanded beads at the time of in-mold molding deteriorates and the obtained expanded beads molded article is in an insufficient molded state.

The closed cell rate of the expanded beads of the present invention is 60% or more, preferably 65% or more, more preferably 70% or more, still more preferably 75% or more, and particularly preferably 80% or more. The expanded beads having a high closed cell rate tend to enable easy in-mold molding of an expanded beads molded article in a good molded state. The expanded beads of the present invention having a closed cell rate of 75% or more particularly exhibit an excellent fusion-bonding property in an expanded beads molded article obtained by in-mold molding using the expanded beads.

The closed cell rate in the present invention is measured with the following method.

First, an expanded bead group having a bulk volume of about 20 cm³ is immersed in water, and thus the apparent volume Va of the expanded bead group is measured. Next, the expanded bead group having the apparent volume Va measured is sufficiently dried, and then the true volume Vx of the expanded beads is measured in accordance with Procedure C described in ASTM D2856-70. Here, the true volume Vx of the expanded beads is the sum of the volume of the resin constituting the expanded beads and the total cell volume of the closed cell portion in the expanded beads.

For the measurement of the true volume Vx, an air comparison pycnometer is used. Examples of a commercially available product of the air comparison pycnometer include an air comparison pycnometer "930" manufactured by Toshiba Beckman CO., LTD. Next, the closed cell rate is calculated with the following equation (1). The closed cell rate is measured five times using different measurement samples with the same procedure as described above, and the arithmetic mean value of the values obtained in each measurement is determined, and taken as the closed cell rate of the expanded beads.
[Mathematical 1] $Closed cell rate \left(%\right) = \left(Vx-W/ρ\right) \times 100 / \left(Va-W/ρ\right)$ (1)
Vx: true volume (cm³) of expanded bead group measured with above method
Va: apparent volume (cm³) of expanded bead group measured from increase in water level at time of immersing expanded bead group in water in measuring cylinder
W: mass (g) of expanded bead group
ρ: density (g/cm³) of resin constituting expanded beads

The expanded beads containing the flame retardant of the present invention are preferably substantially spherical. The expanded beads containing a phosphonate ester-based compound and a NOR type hindered amine-based compound as flame retardants tend to be flat. From the viewpoint of enabling in-mold molding of an expanded beads molded article in a good molded state, a good filling property into a mold, and an excellent storage stability, the average ratio of a long diameter to a short diameter (long diameter/short diameter) of the expanded beads is preferably 1.0 or more and 2.5 or less, more preferably 1.0 or more and 2.1 or less, and still more preferably 1.0 or more and 2.0 or less. In particular if the upper limit of the above-described ratio is 2.0 or less, expanded beads having a particularly excellent fusion-bonding property can be provided. The average ratio (long diameter/short diameter) described above is more preferably 1.2 or more and 1.8 or less. An example of a way of adjusting (long diameter/short diameter) to a preferable range will be described later. In the present invention, as the value of the average ratio (long diameter/short diameter) is closer to 1.0, the appearance of the expanded beads is substantially more spherical, and as the value of the average ratio is larger, the appearance of the expanded beads is flatter. With regard to the expanded beads of the present invention, the terms "substantially spherical" and "flat" refer to the outer shape of the expanded beads visually observed.

The long diameter and the short diameter of the expanded beads described above are measured using an image-based particle size distribution analyzer. More specifically, using the analyzer, the expanded beads are freely dropped in the analyzer, and the freely dropped expanded beads are imaged at high speed with a camera to obtain a plurality of images of the freely dropping expanded beads. From the plurality of images of the freely dropping expanded beads obtained by the high-speed imaging, a plurality of images of the same expanded bead photographed in different photographing directions are extracted. In the plurality of images of the same expanded bead photographed in different photographing directions, the maximum length and the minimum length of the distance between two parallel lines sandwiching the expanded bead are measured by image analysis. The maximum length of the distance between two parallel lines in the plurality of images is determined as the long diameter, and the minimum length of the distance is determined as the short diameter, and then the ratio of the long diameter to the short diameter of one expanded bead is calculated. Then, the ratio in each of the plurality of expanded beads is determined, the arithmetic mean value of the ratios is calculated, and thus the average ratio of the long diameter to the short diameter (long diameter/short diameter) of the expanded beads can be calculated. Examples of the image-based particle size distribution analyzer include a dynamic image analysis particle shape and particle size distribution analyzer and analysis software (trade name: PartAn 3D) manufactured by MicrotracBEL.

The reason why the expanded beads containing a phosphonate ester-based compound and a NOR type hindered amine-based compound tend to be flat is not clear, but is presumed as follows.

In a case where resin beads are prepared and expanded to obtain expanded beads, the resin beads can be prepared as follows. In general, raw materials such as a resin are supplied to an extruder and melt-mixed, a strand-like molten mixture is then extruded from a circular die hole and while being taken up in the extrusion direction, cut so as to intersect with the extrusion direction into a predetermined length and thus pellet-like resin beads having a circular cut surface are prepared. The resin beads prepared in a state where a force is applied in the extrusion direction as described above are extruded from the extruder at a high temperature and then rapidly cooled, so that the stress against the force applied in the extrusion direction remains inside the resin beads. Therefore, such resin beads are more likely to expand, during expansion, in a direction crossing the extrusion direction than in the extrusion direction. Thus, at the time of cutting the molten mixture extruded from the extruder, the stress inside the resin beads and the length of the resin beads on the extrusion direction side can be adjusted by adjusting the take-up speed and the cut width. By expanding the resin particles obtained through the above adjustment, thus substantially spherical expanded beads can be obtained.

Meanwhile, in the case of preparing resin beads using a phosphonate ester-based compound and a NOR type hindered amine-based compound together with a polyolefin-based resin, the strand-like molten mixture extruded from the extruder tends to shrink in a direction perpendicular to the extrusion direction. Pellet-like resin beads prepared by cutting in such a shrunk state tend to be flat. Furthermore, expanded beads obtained by expanding the flat resin beads tend to be flat. As described above, it is presumed that the flat expanded beads are generated under influence of an unintended change in viscosity and an unintended increase in moisture absorption in the molten mixture in the step of producing the resin beads.

The foamed layer in the present invention includes a base material resin constituted of a polyolefin-based resin and contains a phosphonate ester-based compound and a NOR type hindered amine-based compound. In other words, the foamed layer in the present invention includes a base material resin, and the base material resin is a polyolefin-based resin. The foamed layer may further optionally contain another resin as long as an object and an effect of the present invention are not impaired. Furthermore, the foamed layer may contain an optional additive used for producing expanded beads, in addition to the resin, the phosphonate ester-based compound, and the NOR type hindered amine-based compound.

### (Polyolefin-Based Resin)

Examples of the polyolefin-based resin constituting the base material resin include polypropylene-based resins and polyethylene-based resins. The foamed layer may be constituted of one polyolefin-based resin or two or more polyolefin-based resins.

The base material resin refers to a resin contained in an amount of more than 50 mass% in 100 mass% of the resin and the polymer constituting the foamed layer, and the base material resin is preferably contained in an amount of more than 70 mass%, more preferably more than 80 mass%, still more preferably more than 90 mass%, still even more preferably more than 95 mass%, and particularly preferably 100 mass% in 100 mass% of the resin and the polymer constituting the foamed layer.

From the viewpoint of obtaining an expanded beads molded article having a higher compressive strength, the foamed layer in the present invention preferably contains a polypropylene-based resin as the polyolefin-based resin that is the base material resin. In 100 mass% of the base material resin of the foamed layer, the polypropylene-based resin is preferably contained in an amount of 70 mass% or more, more preferably 80 mass% or more, still more preferably 90 mass% or more, still even more preferably 95 mass% or more, and particularly preferably 100 mass%. That is, the base material resin of the foamed layer is particularly preferably constituted of only a polypropylene-based resin.

### Polypropylene-based resin:

In the present description, the term "polypropylene-based resin" refers to a propylene homopolymer and/or a propylene-based copolymer containing a propylene-derived constituent unit in an amount of 50 mass% or more.

Examples of the propylene homopolymer include propylene-based resins such as isotactic polypropylene, syndiotactic polypropylene, and atactic polypropylene. These resins exemplifying the propylene homopolymer may be used singly or in the form of a mixture of two or more thereof.

In the propylene-based copolymer, the content of the propylene-derived structural unit in the polypropylene-based resin is preferably 80 mass% or more, and more preferably 90 mass% or more. In the propylene-based copolymer, the content of the propylene-derived structural unit is preferably 99 mass% or less, and more preferably 98 mass% or less. Examples of the propylene-based copolymer include copolymers of propylene with ethylene and/or an α-olefin having 4 to 20 carbon atoms. Examples of the α-olefin include 1-butene, 1-pentene, 1-hexene, 1-octene, and 4-methyl-1-butene. Other examples of the propylene-based copolymer include an ethylene-propylene random copolymer, a propylene-butene random copolymer, and an ethylene-propylene-butene random copolymer. These propylene-based copolymers may be, for example, random copolymers or block copolymers, and are preferably random copolymers. Examples of the propylene-based copolymer include high-impact polypropylene (block polypropylene) constituted of two or more phases including a continuous phase of a propylene polymer and a rubber phase such as an ethylene-α-olefin copolymer present as a dispersed phase in the continuous phase.

These resins exemplifying the propylene-based copolymer may be used singly or in the form of a mixture of two or more thereof.

In a case where the propylene-based random copolymer contains an ethylene-derived component (ethylene component) and/or a butene-derived component (butene component) as copolymerization components, the total content of the ethylene component and the butene component in the propylene-based random copolymer is preferably 1 mass% or more, more preferably 1.5 mass% or more, and still more preferably 2 mass% or more from the viewpoint of further improving the in-mold moldability of the expanded beads under a low molding pressure condition. From the viewpoint of stably obtaining an expanded beads molded article having a good mechanical property such as compressive strength, the total content of the ethylene component and the butene component in the propylene-based random copolymer is preferably 15 mass% or less. That is, the total content of the ethylene component and the butene component in the propylene-based random copolymer is preferably 1 mass% or more and 15 mass% or less, more preferably 1.5 mass% or more and 15 mass% or less, and still more preferably 2 mass% or more and 15 mass% or less. The content of components derived from ethylene and an α-olefin in the propylene-based random copolymer is determined by IR spectrum measurement.

The polypropylene-based resin may be a linear polypropylene-based resin, a branched polypropylene-based resin, or a combination thereof.

From the viewpoint of easily obtaining expanded beads with a small amount of a blowing agent, the amount of the branched polypropylene-based resin contained in 100 mass% of the base material resin of the foamed layer in the present invention is preferably 50 mass% or less, and more preferably 30 mass% or less.

As a result of studies of the present inventors, it has been confirmed that regarding the expanded beads containing a polypropylene-based resin, a phosphonate ester-based compound, and a NOR type hindered amine-based compound in the base material resin of the foamed layer, the viscosity of the molten mixture tends to decrease at the time of preparing resin beads used for producing the expanded beads. From the viewpoint of suppressing such a decrease in viscosity, the base material resin of the foamed layer is preferably constituted of a linear polypropylene-based resin (A) and a branched polypropylene-based resin (B) having a melt tension of 50 mN or more and/or a polyethylene-based resin (C) having a melt flow rate of 3 g/10 min or less. The melt tension is measured under a condition of 230°C, and the melt flow rate is measured under a condition of a temperature of 190°C and a load of 2.16 kg. The melt flow rate may be appropriately abbreviated as MFR. From the same viewpoint as described above, the base material resin of the foamed layer is more preferably constituted of the linear polypropylene-based resin (A) and the branched polypropylene-based resin (B) having a melt tension of 50 mN or more, and the melt tension is measured under a condition of 230°C. From the same viewpoint, the base material resin of the foamed layer is more preferably constituted of the linear polypropylene-based resin (A) and the polyethylene-based resin (C) having an MFR of 3 g/10 min or less. The MFR is measured under a condition of a temperature of 190°C and a load of 2.16 kg. Furthermore, the total content of the branched polypropylene-based resin (B) and the polyethylene-based resin (C) is more preferably 5 mass% or more and 30 mass% or less with respect to 100 mass% of the total content of the linear polypropylene-based resin (A), the branched polypropylene-based resin (B), and the polyethylene-based resin (C).

According to the above-described preferred aspect, it is easier to achieve the closed cell rate of the expanded beads specified in the present invention, and it is possible to provide expanded beads that can be molded in-mold molding of an expanded beads molded article in a more excellent molded state. Furthermore, according to the above-described preferred aspect, a change in viscosity is suppressed, and thus the average ratio of the long diameter to the short diameter (long diameter/short diameter) of the expanded beads is easily adjusted to a predetermined range, and substantially spherical expanded beads are easily obtained.

In the present invention, the branched polypropylene-based resin refers to a resin that has a long-chain branched structure in the molecular structure of the polypropylene-based resin and thus promotes entanglement between the molecular chains of the resin. The long-chain branched structure is distinguished from a branched structure formed by copolymerizing propylene and an α-olefin. The copolymer is classified as linear polypropylene. For example, as a branched polypropylene-based resin having a long-chain branched structure, a resin is known that has a molecular chain including 21 or more carbon skeletons, but the branched polypropylene-based resin is not limited to such a resin. Examples of the branched polypropylene-based resin include branched homopolypropylene (trade name: Daploy WB130HMS, Daploy WB135HMS, Daploy WB140HMS) manufactured by Borealis GmbH and a branched homopolypropylene resin (trade name: PF814) manufactured by SunAllomer Ltd. In the present invention, the linear polypropylene-based resin refers to a polypropylene-based resin other than the branched polypropylene-based resin, and specific examples of the linear polypropylene-based resin include linear propylene homopolymers and linear propylene-based random copolymers.

### Polyethylene-based resin:

In the present description, the term "polyethylene-based resin" refers to an ethylene homopolymer and an ethylene-based copolymer containing an ethylene-derived constituent unit in an amount of 50 mass% or more. Specifically, examples of the polyethylene-based resin include polyethylene exemplified by high-density polyethylene (PE-HD), medium-density polyethylene (PE-MD), low-density polyethylene (PE-LD), linear low-density polyethylene (PE-LLD), and linear very-low-density polyethylene; and ethylene-based copolymers exemplified by an ethylene-vinyl acetate copolymer and an ethylene-methyl methacrylate copolymer.

In the ethylene-based copolymer, the content of the ethylene-derived structural unit in the polyethylene-based resin is preferably 80 mass% or more, more preferably 90 mass% or more, still more preferably 95 mass% or more, and particularly preferably 98 mass% or more.

### Another resin:

The foamed layer in the present invention may contain a thermoplastic resin other than the polyolefin-based resin as long as an object and an effect of the present invention are not impaired. Examples of the thermoplastic resin include thermoplastic resins other than polyolefin-based resins, exemplified by polystyrene-based resins, polyamide-based resins, polyester-based resins, polycarbonate-based resins, and modified polyphenylene ether-based resins.

The thermoplastic resin may be one resin or a combination of two or more resins.

In 100 mass% of the base material resin in the foamed layer, the content of the thermoplastic resin other than the polyolefin-based resin is preferably 10 mass% or less, more preferably 5 mass% or less, and still more preferably 0 mass%. That is, the foamed layer particularly preferably contains substantially only the polyolefin-based resin as the thermoplastic resin.

The foamed layer in the present invention may contain, in addition to the above-described thermoplastic resin, another polymer exemplified by a thermoplastic elastomer or a non-thermoplastic resin. Examples of the thermoplastic elastomer include thermoplastic elastomers typified by olefin-based thermoplastic elastomers (TPO) and urethane-based thermoplastic elastomers (TPU), and examples of the non-thermoplastic resin include thermosetting resins and rubber.

In a case where the foamed layer contains another polymer described above, the content of another polymer in the foamed layer is preferably 20 mass% or less, more preferably 10 mass% or less, still more preferably 5 mass% or less, still even more preferably 3 mass% or less, and particularly preferably 0 mass%. That is, the foamed layer particularly preferably contains substantially no polymer other than the thermoplastic resin.

### (Melting Point of Polyolefin-Based Resin)

In a case where the polyolefin-based resin contains a polypropylene-based resin, the melting point of the polypropylene-based resin is preferably 130°C or higher, more preferably 135°C or higher, and still more preferably 140°C or higher from the viewpoint of enhancing a mechanical property of the resulting expanded beads molded article. Meanwhile, the melting point of the polypropylene-based resin is preferably 155°C or lower, more preferably 150°C or lower, and still more preferably 148°C or lower from the viewpoint of enhancing the in-mold moldability of the expanded beads under a condition of a low molding pressure. In other words, the melting point of the polypropylene-based resin is preferably 130°C or higher and 155°C or lower, more preferably 135°C or higher and 150°C or lower, and still more preferably 140°C or higher and 148°C or lower.

In a case where the polyolefin-based resin contains a polyethylene-based resin, the melting point of the polyethylene-based resin is preferably 110°C or higher, more preferably 112°C or higher, and still more preferably 115°C from the viewpoint of enhancing a mechanical property of the resulting expanded beads molded article. Meanwhile, the melting point of the polyethylene-based resin is preferably 130°C or lower, more preferably 128°C or lower, and still more preferably 125°C or lower from the viewpoint of enhancing the in-mold moldability of the expanded beads under a condition of a low molding pressure. In other words, the melting point of the polyethylene-based resin is preferably 110°C or higher and 130°C or lower, more preferably 112°C or higher and 128°C or lower, and still more preferably 115°C or higher and 125°C or lower.

The melting point of the polyolefin-based resin is measured in accordance with JIS K 7121:2012 using the polyolefin-based resin or the polyolefin-based resin expanded beads as a test piece. Specifically, "(2) Case of measuring melting temperature after prescribed heat treatment" is adopted for the condition adjustment of the test piece, and the test piece is heated from 23°C to 200°C at a heating rate of 10°C/min under the condition of a nitrogen inflow of 30 mL/min, then held at the temperature for 10 minutes, then cooled to 23°C at a cooling rate of 10°C/min, and heated again to 200°C at a heating rate of 10°C/min to obtain a DSC curve (DSC curve at the second heating). Next, the peak top temperature of the melting peak in the DSC curve at the second heating is determined, and this value is taken as the melting point of the polyolefin-based resin. In a case where the DSC curve at the second heating includes a plurality of melting peaks, the peak top temperature of the melting peak having the highest melting peak height based on the baseline is adopted as the melting point.

### (Melt Flow Rate of Polyolefin-Based Resin)

In a case where the polyolefin-based resin contains a polypropylene-based resin, the melt flow rate of the polypropylene-based resin is preferably 1 g/10 min or more, more preferably 3 g/10 min or more, and still more preferably 5 g/10 min or more from the viewpoint of enhancing the foamability at the time of expanding the resin beads, and from the viewpoint of enhancing the secondary foamability at the time of in-mold molding of the expanded beads. Meanwhile, the melt flow rate of the polypropylene-based resin is preferably 20 g/10 min or less, more preferably 15 g/10 min or less, and still more preferably 10 g/10 min or less from the viewpoint of enhancing the uniformity of cells of the expanded beads, and from the viewpoint of enhancing a physical property of the expanded beads molded article. In other words, the MFR of the polypropylene-based resin is preferably 1 g/10 min or more and 20 g/10 min or less, more preferably 3 g/10 min or more and 15 g/10 min or less, and still more preferably 5 g/10 min or more and 10 g/10 min or less.

The MFR of the polypropylene-based resin is measured under the condition of a temperature of 230°C and a load of 2.16 kg in accordance with JIS K 7210-1:2014.

In a case where the polyolefin-based resin contains a polyethylene-based resin, the MFR of the polyethylene-based resin is preferably 0.5 g/10 min or more and more preferably 0.8 g/10 min or more from the viewpoint of enhancing the foamability at the time of expanding the resin beads, and from the viewpoint of enhancing the secondary foamability at the time of in-mold molding of the expanded beads. Meanwhile, the melt flow rate of the polyethylene-based resin is preferably 4 g/10 min or less and more preferably 3 g/10 min or less from the viewpoint of enhancing the uniformity of cells of the expanded beads, and from the viewpoint of enhancing a physical property of the expanded beads molded article. In other words, the MFR of the polyethylene-based resin is preferably 0.5 g/10 min or more and 4 g/10 min or less, and more preferably 0.8 g/10 min or more and 3 g/10 min or less. The MFR of the polyethylene-based resin is measured under the condition of a temperature of 190°C and a load of 2.16 kg in accordance with JIS K 7210-1:2014.

### (Phosphonate Ester-Based Compound)

The foamed layer in the present invention contains a phosphonate ester-based compound.

The phosphonate ester-based compound is a compound including a phosphonate ester moiety in the molecule, and examples of the phosphonate ester-based compound include cyclic phosphonate ester-based compounds and alkyl phosphonate ester-based compounds.

### Cyclic phosphonate ester-based compound:

The cyclic phosphonate ester-based compound is a compound including one or more cyclic phosphonate ester moieties in the molecule. The cyclic phosphonate ester-based compound is preferably at least one compound selected from the group consisting of compounds represented by the following general formula (1), compounds represented by the following general formula (2), compounds represented by the following general formula (3), and compounds represented by the following general formula (4), and is more preferably pentaerythritol diphosphonate represented by the following general formula (1). The pentaerythritol diphosphonate represented by the general formula (1) is a spirocyclic compound including two cyclic phosphonate ester moieties in the molecule. The cyclic phosphonate ester-based compounds may be used singly, or may be used in combination of two or more thereof. 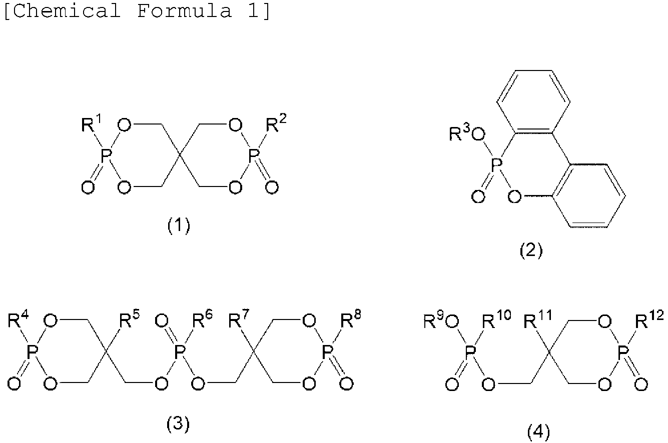 (In the general formula, R¹ and R² each represent an alkyl group having 1 to 10 carbon atoms, an alkenyl group having 2 to 10 carbon atoms, a benzyl group, a phenylethyl group, a phenyl group, or a naphthyl group, R³ represents an alkyl group having 1 to 22 carbon atoms or an aryl group having 6 to 15 carbon atoms, R⁴, R⁸, R⁹, and R¹² each represent an alkyl group having 1 to 4 carbon atoms, R⁵, R⁷, and R¹¹ each represent a hydrogen atom or an alkyl group having 1 to 4 carbon atoms, and R⁶ and R¹⁰ each represent an alkyl group having 1 to 22 carbon atoms, a cycloalkyl group having 9 to 22 carbon atoms, an aryl group having 9 to 22 carbon atoms, or an aralkyl group having 9 to 22 carbon atoms.)

In the general formula (1), R¹ and R² may be the same or different, and are preferably the same.

R¹ represents an alkyl group having 1 to 10 carbon atoms, an alkenyl group having 2 to 10 carbon atoms, a benzyl group, a phenylethyl group, a phenyl group, or a naphthyl group, preferably represents an alkyl group having 1 or 2 carbon atoms, and more preferably represents a methyl group.

R² represents an alkyl group having 1 to 10 carbon atoms, an alkenyl group having 2 to 10 carbon atoms, a benzyl group, a phenylethyl group, a phenyl group, or a naphthyl group, preferably represents an alkyl group having 1 or 2 carbon atoms, and more preferably represents a methyl group.

From the above, among compounds represented by the general formula (1), compounds in which both R¹ and R² represent a methyl group are still more preferable.

In the general formula (2), R³ represents an alkyl group having 1 to 22 carbon atoms or an aryl group having 6 to 15 carbon atoms, and preferably represents a phenyl group.

In the general formula (3), R⁴ and R⁸ may be the same or different, and are preferably the same.

R⁴ represents an alkyl group having 1 to 4 carbon atoms, and preferably represents a methyl group.

R⁸ represents an alkyl group having 1 to 4 carbon atoms, and preferably represents a methyl group.

In the general formula (3), R⁵ and R⁷ may be the same or different, and are preferably the same.

R⁵ represents a hydrogen atom or an alkyl group having 1 to 4 carbon atoms, and preferably represents an ethyl group.

R⁷ represents a hydrogen atom or an alkyl group having 1 to 4 carbon atoms, and preferably represents an ethyl group.

R⁶ represents an alkyl group having 1 to 22 carbon atoms, a cycloalkyl group having 9 to 22 carbon atoms, an aryl group having 9 to 22 carbon atoms, or an aralkyl group having 9 to 22 carbon atoms, and preferably represents a linear alkyl group having 1 to 12 carbon atoms.

In the general formula (4), R⁹ and R¹² may be the same or different, and are preferably the same.

R⁹ represents an alkyl group having 1 to 4 carbon atoms, and preferably represents a methyl group.

R¹² represents an alkyl group having 1 to 4 carbon atoms, and preferably represents a methyl group.

R¹⁰ represents an alkyl group having 1 to 22 carbon atoms, a cycloalkyl group having 9 to 22 carbon atoms, an aryl group having 9 to 22 carbon atoms, or an aralkyl group having 9 to 22 carbon atoms, and preferably represents a linear alkyl group having 1 to 12 carbon atoms.

R¹¹ represents a hydrogen atom or an alkyl group having 1 to 4 carbon atoms, and preferably represents an ethyl group.

The melting point TmA of the cyclic phosphonate ester-based compound is preferably 80°C or higher and 350°C or lower, more preferably 150°C or higher and 330°C or lower, and still more preferably 200°C or higher and 300°C or lower.

The melting point TmA of the cyclic phosphonate ester-based compound is measured in accordance with JIS K 0064:1992.

The amount of the phosphonate ester-based compound blended in the foamed layer of the polyolefin-based resin expanded beads of the present invention is 5 parts by mass or more and 25 parts by mass or less with respect to 100 parts by mass of the base material resin of the foamed layer. If the amount of the phosphonate ester-based compound blended is too small, an expanded beads molded article having high flame retardancy cannot be obtained. If the amount of the phosphonate ester-based compound blended is too large, an expanded beads molded article having an excellent fusion-bonding property cannot be obtained.

From the viewpoint of obtaining an expanded beads molded article having higher flame retardancy, the amount of the phosphonate ester-based compound blended in the foamed layer is preferably 6 parts by mass or more, more preferably 7 parts by mass or more, still more preferably 8 parts by mass or more, and particularly preferably 9 parts by mass or more with respect to 100 parts by mass of the base material resin of the foamed layer.

From the viewpoint of obtaining an expanded beads molded article having a more excellent fusion-bonding property, the amount of the phosphonate ester-based compound blended in the foamed layer is preferably 22.5 parts by mass or less, more preferably 20 parts by mass or less, still more preferably 19 parts by mass or less, and particularly preferably 16 parts by mass or less with respect to 100 parts by mass of the base material resin of the foamed layer.

In other words, the amount of the phosphonate ester-based compound blended in the foamed layer is preferably 6 parts by mass or more and 22.5 parts by mass or less, more preferably 7 parts by mass or more and 20 parts by mass or less, still more preferably 8 parts by mass or more and 19 parts by mass or less, and particularly preferably 9 parts by mass or more and 16 parts by mass or less with respect to 100 parts by mass of the base material resin of the foamed layer.

The phosphonate ester-based compound described in this paragraph is a compound including a phosphonate ester moiety in the molecule as described above, and examples of the phosphonate ester-based compound include cyclic phosphonate ester-based compounds and alkyl phosphonate ester-based compounds.

### (NOR Type Hindered Amine-Based Compound)

The foamed layer in the present invention contains a NOR type hindered amine-based compound.

The NOR type hindered amine-based compound has a structure including a 2,2,6,6-tetramethyl-4-piperidinamine moiety having a hydrocarbon group bonded to a nitrogen atom via an oxygen atom in the following general formula (5), and thus enables improvement in flame retardancy of the molded article. 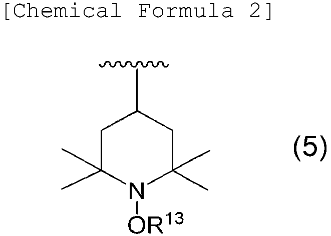 (In the general formula (5), R¹³ represents a hydrocarbon group.)

In the general formula (5), R¹³ represents a hydrocarbon group, and in a case where one molecule of the hindered amine-based compound includes two or more hindered amine moieties represented by the general formula (5), a plurality of R¹³s may be the same or different, and the plurality of R¹³s are preferably the same.

R¹³ is preferably at least one selected from the group consisting of alkyl groups and cycloalkyl groups, and more preferably a cycloalkyl group. In a case where R¹³ is an alkyl group, R¹³ is more preferably an alkyl group having 1 to 20 carbon atoms, and still more preferably an undecyl group. In a case where R¹³ is a cycloalkyl group, R¹³ is more preferably a cycloalkyl group having 4 to 10 carbon atoms, and still more preferably a cyclohexyl group.

The NOR type hindered amine-based compounds may be used singly, or may be used in combination of two or more thereof.

The molecular weight of the NOR type hindered amine-based compound is preferably 600 or more, and more preferably 1500 or more from the viewpoint of suppressing bleeding out from the expanded beads molded article. From the viewpoint of improving dispersion of the NOR type hindered amine-based compound in the resin, the molecular weight of the NOR type hindered amine-based compound is preferably 3000 or less, and more preferably 2500 or less.

In the NOR type hindered amine-based compound, the number of 2,2,6,6-tetramethyl-4-piperidinamine moieties having a hydrocarbon group bonded to nitrogen via an oxygen bond in the general formula (5) is preferably 2 or more and 8 or less, more preferably 2 or more and 6 or less, and still more preferably 2 or 6.

The amount of the NOR type hindered amine-based compound blended in the foamed layer of the polyolefin-based resin expanded beads of the present invention is 0.3 parts by mass or more and less than 5 parts by mass with respect to 100 parts by mass of the base material resin of the foamed layer. If the amount of the NOR type hindered amine-based compound blended is too small, an expanded beads molded article having high flame retardancy cannot be obtained. If the amount of the NOR type hindered amine-based compound blended is too large, an expanded beads molded article having an excellent fusion-bonding property cannot be obtained.

From the viewpoint of obtaining an expanded beads molded article having higher flame retardancy, the amount of the NOR type hindered amine-based compound blended in the foamed layer is preferably 0.4 parts by mass or more, more preferably 0.5 parts by mass or more, and still more preferably 0.6 parts by mass or more with respect to 100 parts by mass of the base material resin of the foamed layer. From the viewpoint of obtaining an expanded beads molded article having a more excellent fusion-bonding property, the amount of the NOR type hindered amine-based compound blended in the foamed layer is preferably 4 parts by mass or less, more preferably 3 parts by mass or less, still more preferably 2 parts by mass or less, still even more preferably 1 part by mass or less, and particularly preferably 0.9 parts by mass or less with respect to 100 parts by mass of the base material resin of the foamed layer.

In other words, the amount of the NOR type hindered amine-based compound blended in the foamed layer is preferably 0.4 parts by mass or more and 4 parts by mass or less, more preferably 0.5 parts by mass or more and 3 parts by mass or less, still more preferably 0.6 parts by mass or more and 2 parts by mass or less, still even more preferably 0.6 parts by mass or more and 1 part by mass or less, and particularly preferably 0.6 parts by mass or more and 0.9 parts by mass or less with respect to 100 parts by mass of the base material resin of the foamed layer.

As described above, the phosphonate ester-based compound and the NOR type hindered amine-based compound are contained in a predetermined range with respect to 100 parts by mass of the base material resin of the foamed layer.

From the viewpoint of exhibiting higher flame retardancy, the ratio of the amount of the NOR type hindered amine-based compound blended to the amount of the phosphonate ester-based compound blended in the foamed layer is preferably 0.04 or more, and more preferably 0.05 or more. From the viewpoint of further enhancing the fusion-bonding property of the expanded beads molded article, the ratio of the amount of the NOR type hindered amine-based compound blended to the amount of the phosphonate ester-based compound blended in the foamed layer is preferably 0.50 or less, more preferably 0.40 or less, and still more preferably 0.30 or less. That is, the ratio of the amount of the NOR type hindered amine-based compound blended to the amount of the phosphonate ester-based compound blended in the foamed layer is preferably 0.04 or more and 0.50 or less, more preferably 0.04 or more and 0.40 or less, and still more preferably 0.05 or more and 0.30 or less.

### (Optional Additive)

The above-described expanded beads of the present invention may appropriately contain an optional additive as long as an object and an effect of the present invention are not impaired. Examples of the optional additive include various conventionally known additives exemplified by a conductive material, an antioxidant, a flame retardant auxiliary, a cell controlling agent, a lubricant, a crystal nucleating agent, a light stabilizer such as an ultraviolet inhibitor, an antistatic agent, and a colorant. These additives are added, for example, in the step of producing the resin beads, and thus can be blended in the expanded beads. Some optional additives will be described below.

### Conductive carbon material:

Examples of the conductive material serving as an optional additive include conductive carbon materials.

The foamed layer preferably contains a conductive carbon material. Examples of the conductive carbon material include conductive carbon black, single-walled carbon nanotubes, and multi-walled carbon nanotubes. In the case of using conductive carbon black as the conductive carbon material, the DBP oil absorption of the conductive carbon black measured in accordance with JIS K 6217-4:2008 is preferably 150 cm³/100 g to 700 cm³/100 g, and more preferably 200 cm³/100 g to 500 cm³/100 g. The content of the conductive carbon material in the foamed layer is preferably 1 part by mass or more and 10 parts by mass or less, more preferably 1.5 parts by mass or more and 8 parts by mass or less, and still more preferably 2 parts by mass or more and 6 parts by mass or less with respect to 100 parts by mass of the base material resin of the foamed layer. In other words, from the viewpoint of the conductive property, the content of the conductive carbon material in the foamed layer is preferably 1 part by mass or more, more preferably 1.5 parts by mass or more, and still more preferably 2.0 parts by mass or more with respect to 100 parts by mass of the base material resin of the foamed layer. Meanwhile, from the viewpoint of the moldability, the content of the conductive carbon material in the foamed layer is preferably 10 parts by mass or less, more preferably 8 parts by mass or less, and still more preferably 6 parts by mass or less with respect to 100 parts by mass of the base material resin of the foamed layer.

In the present invention, it is presumed that the viscosity of the molten mixture changes under influence of the phosphonate ester-based compound and the NOR type hindered amine-based compound. To cope with this, the conductive carbon material is contained in a predetermined range to form a network structure of the conductive carbon material efficiently in the polyolefin-based resin, and thus a change in viscosity of the molten mixture can be suppressed. Thus, it is easier to achieve the closed cell rate of the expanded beads specified in the present invention, and it is easy to obtain expanded beads that can be molded in-mold molding of an expanded beads molded article in a good molded state. Furthermore, according to an aspect in which the above-described conductive carbon material is blended, a change in viscosity of the resin at the time of melt-mixing is suppressed, and thus the average ratio of the long diameter to the short diameter (long diameter/short diameter) of the expanded beads is easily adjusted to a predetermined range, and substantially spherical expanded beads are easily obtained.

### Phenolic antioxidant:

In the present invention, an aspect is preferable in which the foamed layer contains a phenolic antioxidant.

The phenolic antioxidant is an antioxidant having, in a molecule thereof, one or more phenol structures having one or more hydroxyl groups bonded to an aromatic ring, preferably having two or more phenolic structures in the molecule, and more preferably having three or more phenolic structures in the molecule. For example, at a high temperature (for example, 180°C or higher) as in a step of melting and kneading a resin, the resin and the additive tend to be decomposed in a relatively short time. To cope with this, the phenolic antioxidant is contained in the molten mixture containing the resin that constitutes the foamed layer, and thus decomposition of the resin and the additive in a short time can be suppressed at such a high temperature.

Specific examples of the phenolic antioxidant include 1,3,5-trimethyl-2,4,6-tris(3',5'-di-t-butyl-4'-hydroxybenzyl)benzene, 2,6-di-t-butyl-p-cresol, triethyleneglycol bis[3-(3-t-butyl-5-methyl-4-hydroxyphenyl)propionate], 2,2-methylenebis(4-methyl-6-t-butylphenol), 1,6-hexanediol-bis[3-(3,5-di-t-butyl-4-hydroxyphenyl)propionate], and pentaerythritol tetrakis[3-(3,5-di-t-butyl-4-hydroxyphenyl)propionate].

These may be used singly or in combination of two or more kinds thereof. Among them, pentaerythritol tetrakis[3-(3,5-dit-butyl-4-hydroxyphenyl)propionate] and/or 1,3,5-trimethyl-2,4,6-tris(3',5'-di-t-butyl-4'-hydroxybenzyl)benzene is preferable, and 1,3,5-trimethyl-2,4,6-tris(3',5'-di-t-butyl-4'-hydroxybenzyl)benzene is particularly preferable from the viewpoint of further improving the flame retardancy.

The melting point TmB of the phenolic antioxidant is preferably 50°C or higher and 350°C or lower, more preferably 80°C or higher and 330°C or lower, still more preferably 100°C or higher and 320°C or lower, still even more preferably 150°C or higher and 310°C or lower, and particularly preferably 200°C or higher and 300°C or lower from the viewpoint of obtaining an expanded beads molded article having higher flame retardancy. The melting point TmB of the phenolic antioxidant is measured in accordance with JIS K 0064:1992.

### <Ratio of Phenolic Antioxidant Blended to 100 Parts by Mass of Base Material Resin>

From the viewpoint of providing an expanded beads molded article having higher flame retardancy, the amount of the phenolic antioxidant blended in the foamed layer is preferably 0.01 parts by mass or more, more preferably 0.02 parts by mass or more, still more preferably 0.04 parts by mass or more, and still more preferably 0.08 parts by mass or more with respect to 100 parts by mass of the base material resin of the foamed layer.

From the viewpoint of obtaining an expanded beads molded article in a more excellent molded state, the amount of the phenolic antioxidant blended in the foamed layer is preferably 0.5 parts by mass or less, more preferably 0.3 parts by mass or less, still more preferably 0.2 parts by mass or less, and particularly preferably 0.15 parts by mass or less with respect to 100 parts by mass of the base material resin of the foamed layer.

In other words, the amount of the phenolic antioxidant blended in the foamed layer is preferably 0.01 parts by mass or more and 0.5 parts by mass or less, more preferably 0.02 parts by mass or more and 0.3 parts by mass or less, still more preferably 0.04 parts by mass or more and 0.2 parts by mass or less, and particularly preferably 0.08 parts by mass or more and 0.15 parts by mass or less with respect to 100 parts by mass of the base material resin of the foamed layer.

### <Ratio of Phenolic Antioxidant Blended to Amount of NOR Type Hindered Amine-Based Compound Blended in Foamed Layer>

From the viewpoint of providing expanded beads enabling in-mold molding of an expanded beads molded article exhibiting higher flame retardancy in an excellent molded state, the ratio of the amount of the phenolic antioxidant blended to the amount of the NOR type hindered amine-based compound blended is preferably 0.03 or more, more preferably 0.04 or more, still more preferably 0.06 or more, and particularly preferably 0.08 or more. The ratio of the amount of the phenolic antioxidant blended to the amount of the NOR type hindered amine-based compound blended is, in other words, the blending ratio represented by phenolic antioxidant/NOR type hindered amine-based compound in the foamed layer.

From the viewpoint of obtaining an expanded beads molded article having higher flame retardancy, the ratio of the amount of the phenolic antioxidant blended to the amount of the NOR type hindered amine-based compound blended is more preferably 0.9 or less, still more preferably 0.5 or less, still even more preferably 0.3 or less, and particularly preferably 0.15 or less.

That is, the ratio of the amount of the phenolic antioxidant blended to the amount of the NOR type hindered amine-based compound blended is preferably 0.03 or more and 0.9 or less, more preferably 0.04 or more and 0.5 or less, still more preferably 0.06 or more and 0.3 or less, and still even more preferably 0.08 or more and 0.15 or less.

From the viewpoint of more sufficiently solving the anticipated problem of the present invention by above findings, it is preferable that the foamed layer contain a phenolic antioxidant, the amount of the phenolic antioxidant blended in the foamed layer is 0.01 parts by mass or more and 0.5 parts by mass or less with respect to 100 parts by mass of the base material resin of the foamed layer, and the ratio of the amount of the phenolic antioxidant blended to the amount of the NOR type hindered amine-based compound blended is 0.03 or more and 0.9 or less.

### Sulfur-based antioxidant:

The foamed layer of the polyolefin-based resin expanded beads of the present invention preferably contains a sulfur-based antioxidant.

Examples of the sulfur-based antioxidant include esters having a sulfide bond in the molecule. Specific examples of the esters having a sulfide bond in the molecule include didodecyl-3,3'-thiodipropionate, ditridecyl-3,3'-thiodipropionate, ditetradecyl-3,3'-thiodipropionate, dioctadecyl-3,3'-thiodipropionate, pentaerythritol tetrakis(3-dodecylthiopropionate), pentaerythritol tetrakis(3-tridecylthiopropionate), pentaerythritol tetrakis(3-tetradecylthiopropionate), and pentaerythritol tetrakis(3-octadecylthiopropionate).

These may be used singly or in combination of two or more kinds thereof.

### <Amount of Sulfur-Based Antioxidant Blended to 100 Parts by Mass of Base Material Resin>

From the viewpoint of obtaining excellent mechanical properties such as a compression property even in a case where the expanded beads molded article is placed in a high-temperature environment for a long period of time, the amount of the sulfur-based antioxidant blended in the foamed layer of the expanded beads of the present invention is preferably 0.01 parts by mass or more, more preferably 0.04 parts by mass or more, and still more preferably 0.06 parts by mass or more with respect to 100 parts by mass of the base material resin of the foamed layer.

The amount of the sulfur-based compound blended in the foamed layer is preferably 0.5 parts by mass or less, more preferably 0.4 parts by mass or less, and still more preferably 0.3 parts by mass or less with respect to 100 parts by mass of the base material resin of the foamed layer from the viewpoint of obtaining an expanded beads molded article having high flame retardancy.

In other words, the amount of the sulfur-based antioxidant blended is preferably 0.01 parts by mass or more and 0.5 parts by mass or less, more preferably 0.04 parts by mass or more and 0.4 parts by mass or less, and still more preferably 0.06 parts by mass or more and 0.3 parts by mass or less with respect to 100 parts by mass of the base material resin of the foamed layer.

### <Ratio of Amount of Sulfur-Based Antioxidant Blended to Amount of NOR Type Hindered Amine-Based Compound Blended>

The ratio of the amount of the sulfur-based antioxidant blended to the amount of the NOR type hindered amine-based compound blended is preferably 0.03 or more, more preferably 0.04 or more, still more preferably 0.06 or more, and particularly preferably 0.08 or more from the viewpoint of obtaining excellent mechanical properties such as a compression property even in a case where the expanded beads molded article is placed in a high-temperature environment for a long period of time.

From the viewpoint of obtaining an expanded beads molded article having high flame retardancy, the ratio of the amount of the sulfur-based antioxidant blended to the amount of the NOR type hindered amine-based compound blended is preferably 0.9 or less, more preferably 0.5 or less, still more preferably 0.3 or less, and particularly preferably 0.15 or less. The ratio of the amount of the sulfur-based antioxidant blended to the amount of the NOR type hindered amine-based compound blended is, in other words, the blending ratio represented by sulfur-based antioxidant/NOR type hindered amine-based compound.

In other words, the ratio of the amount of the sulfur-based antioxidant blended to the amount of the NOR type hindered amine-based compound blended in the foamed layer is preferably 0.03 or more and 0.9 or less, more preferably 0.04 or more and 0.5 or less, still more preferably 0.06 or more and 0.3 or less, and particularly preferably 0.08 or more and 0.15 or less.

From the viewpoint of more sufficiently solving the anticipated problem of the present invention by the findings described above, it is preferable that the foamed layer contain a sulfur-based antioxidant, the amount of the sulfur-based antioxidant blended in the foamed layer is 0.01 parts by mass or more and 0.5 parts by mass or less with respect to 100 parts by mass of the base material resin of the foamed layer, and the ratio of the amount of the sulfur-based antioxidant blended to the amount of the NOR type hindered amine-based compound blended is 0.03 or more and 0.9 or less.

### Cell controlling agent:

Examples of the cell controlling agent include inorganic powders exemplified by a boric acid metal salt, talc, mica, calcium carbonate, borax, aluminum hydroxide, and silica, polyhydric alcohols exemplified by glycerin, polyethylene glycol, and pentaerythritol, and aliphatic alcohols exemplified by cetyl alcohol and stearyl alcohol. As the cell controlling agent, for example, a boric acid metal salt exemplified by zinc borate and magnesium borate is preferably used, and zinc borate is more preferably used. The amount of the cell controlling agent blended in the foamed layer is preferably 0.005 part by mass or more and 0.5 parts by mass or less, more preferably 0.01 parts by mass or more and 0.2 parts by mass or less, and still more preferably 0.015 parts by mass or more and 0.15 parts by mass or less with respect to 100 parts by mass of the base material resin of the foamed layer.

In the case of using zinc borate as the cell controlling agent, the number-based arithmetic mean bead diameter is preferably 0.5 µm or more and 15 µm or less, and more preferably 1 µm or more and 10 µm or less. The number-based arithmetic mean bead diameter of zinc borate is determined by converting the volume-based particle size distribution measured with a laser diffraction scattering method into a number-based particle size distribution on the assumption that the shape of a bead is a sphere to obtain the number-based particle size distribution and arithmetically averaging the bead diameters based on the number-based particle size distribution. The bead diameter means the diameter of a sphere having the same volume as a bead.

### Ultraviolet absorber:

Examples of the ultraviolet absorber include benzophenone-based compounds, benzotriazole-based compounds, triazine-based compounds, and benzoate-based compounds. Examples of the benzophenone-based compound include 2-hydroxy-4-octyloxybenzophenone. Examples of the benzotriazole-based compound include 2-(5-methyl-2-hydroxyphenyl)benzotriazole, 2-[2-hydroxy-3,5-bis(α,α-dimethylbenzylphenyl)]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole. Examples of the triazine-based compound include 2-[4,6-diphenyl-1,3,5-triazine-2-yl]-5-(hexyloxy)phenol and 2-[4,6-bis(2,4-dimethylphenyl)-1,3,5-triazine-2-yl]-5-(n-octyloxy)phenol. Examples of the benzoate-based compound include 2,4-di-t-butylphenyl-3,5-di-t-butyl-4-hydroxybenzoate and hexadecyl-3,5-di-t-butyl-4-hydroxybenzoate.

In a case where the foamed layer contains an ultraviolet absorber, the amount of the ultraviolet absorber blended in the foamed layer is preferably 0.01 parts by mass or more and 2 parts by mass or less, more preferably 0.05 parts by mass or more and 1.5 parts by mass or less, and still more preferably 0.1 parts by mass or more and 1 part by mass or less with respect to 100 parts by mass of the base material resin of the foamed layer.

The ultraviolet absorber is a compound having a property of absorbing ultraviolet rays, and is a compound capable of mainly absorbing light having a wavelength of 300 µm to 400 µm.

### Light stabilizer:

Examples of the light stabilizer include non-NOR type hindered amine-based compounds. The non-NOR type hindered amine-based compounds are a compound having a 2,2,6,6-tetramethyl-4-piperidinamine moiety in which an atom directly bonded to a nitrogen atom is only hydrogen or carbon.

The content of the light stabilizer in the foamed layer is preferably 0.01 parts by mass or more and 2 parts by mass or less, more preferably 0.05 parts by mass or more and 1.5 parts by mass or less, and still more preferably 0.1 parts by mass or more and 1 part by mass or less with respect to 100 parts by mass of the base material resin of the foamed layer.

### (Optional Characteristics of Polyolefin-Based Resin Expanded Beads)

As described above, the expanded beads of the present invention contain the phosphonate ester-based compound and the NOR type hindered amine-based compound in an amount within a specific range, and preferably further have the following characteristics. The following optional characteristics, that is, the multilayer structure, the bulk density, the high-temperature peak, the average bead diameter, and the average mass, will be described, and the expanded beads of the present invention preferably include one or more of these optional characteristics.

### Expanded beads having a multilayer structure:

The polyolefin-based resin expanded beads of the present invention may be single-layer expanded beads having only a bead-like foamed layer, or may be expanded beads having a multilayer structure including a bead-like foamed layer serving as a core layer and a covering layer covering the foamed layer. The covering layer may cover the entire surface of the foamed layer, or may cover a part of the surface of the foamed layer. The foamed layer may have a through hole.

The expanded beads preferably have a multilayer structure from the following viewpoints. If the expanded beads include a covering layer, the expanded beads molded article obtained by in-mold molding of the expanded beads exhibits higher flame retardancy, and an expanded beads molded article having a better surface property and a better fusion-bonding property is obtained.

In the case of the expanded beads having a multilayer structure, the mass ratio of the foamed layer to the covering layer is not particularly limited, and the mass ratio of the foamed layer to the covering layer is preferably 95 : 5 to 70 : 30, more preferably 92 : 8 to 72 : 28, still more preferably 91 : 9 to 75 : 25, still even more preferably 90 : 10 to 78 : 22, and particularly preferably 88 : 12 to 80 : 20.

In a case where the mass ratio of the covering layer is relatively high, an expanded beads molded article obtained by in-mold molding of expanded beads having the covering layer exhibits higher flame retardancy, and the expanded beads molded article is likely to achieve the closed cell rate of the expanded beads specified in the present invention, and exhibits a more excellent surface property and a more excellent fusion-bonding property. Furthermore, according to the above-described preferred aspect, the average ratio of the long diameter to the short diameter (long diameter/short diameter) of the expanded beads is easily adjusted to a predetermined range, and substantially spherical expanded beads are easily obtained.

The base material resin of the covering layer may be a polyolefin-based resin exemplified by a polyethylene-based resin and a polypropylene-based resin, or may be a resin other than the polyolefin-based resin and/or a polymer. For the base material resin of the covering layer, the above description of the resin used in the foamed layer is appropriately referred to. The base material resin of the covering layer refers to a resin and a polymer constituting the covering layer.

The base material resin of the covering layer and the base material resin of the foamed layer may be the same or different. From the viewpoint of obtaining a good fusion-bonding property, the melting point or the softening point of the base material resin of the covering layer is preferably lower than the melting point of the base material resin of the foamed layer.

The covering layer may contain a phosphonate ester-based compound and a NOR type hindered amine-based compound.

From the viewpoint of obtaining an expanded beads molded article having good flame retardancy while reducing the amount of the flame retardant added, the ratio I of the amount of the phosphonate ester-based compound blended in the covering layer to the base material resin of the covering layer of the expanded beads is preferably smaller than the ratio II of the amount of the phosphonate ester-based compound blended in the foamed layer to the base material resin of the foamed layer. That is, when the ratio I is (amount of phosphonate ester-based compound blended in covering layer)/(mass of base material resin of covering layer) and the ratio II is (amount of phosphonate ester-based compound blended in foamed layer)/(mass of base material resin of foamed layer), ratio I < ratio II is preferably satisfied. Furthermore, the covering layer more preferably contains no phosphonate ester-based compound.

From the viewpoint of obtaining an expanded beads molded article having good flame retardancy while reducing the amount of the flame retardant added, the ratio III of the amount of the NOR type hindered amine-based compound blended in the covering layer to the base material resin of the covering layer of the expanded beads is preferably smaller than the ratio IV of the amount of the NOR type hindered amine-based compound blended in the foamed layer to the base material resin of the foamed layer. That is, when the ratio III is (amount of NOR type hindered amine-based compound blended in covering layer)/(mass of base material resin of covering layer) and the ratio IV is (amount of NOR type hindered amine-based compound blended in foamed layer)/(mass of base material resin of foamed layer), ratio III < ratio IV is preferably satisfied. Furthermore, the covering layer more preferably contains no NOR type hindered amine-based compound.

From the viewpoint of obtaining an expanded beads molded article having good flame retardancy while reducing the amount of the flame retardant added, the ratios in the expanded beads preferably satisfy ratio I< ratio II and ratio III < ratio IV.

The covering layer may be in a foamed state or a non-foamed state. From the viewpoint of improving the molded state of the expanded beads molded article, the covering layer is preferably in a substantially non-foamed state. The substantially non-foamed state includes a state in which the covering layer is not foamed and contains no cell and a state in which cells disappear after foaming, and the substantially non-foamed state means that almost no cell structure is included.

### Bulk density of expanded beads:

The bulk density of the expanded beads of the present invention is not particularly limited, and the bulk density is preferably 30 kg/m³ or more, more preferably 50 kg/m³ or more, still more preferably 70 kg/m³ or more, still even more preferably 80 kg/m³ or more, and particularly preferably 90 kg/m³ or more. The bulk density of the expanded beads of the present invention is preferably 200 kg/m³ or less, more preferably 180 kg/m³ or less, still more preferably 150 kg/m³ or less, and particularly preferably 130 kg/m³ or less.

In other words, the bulk density of the expanded beads of the present invention is preferably 30 kg/m³ or more and 200 kg/m³ or less, more preferably 50 kg/m³ or more and 180 kg/m³ or less, still more preferably 70 kg/m³ or more and 150 kg/m³ or less, still even more preferably 80 kg/m³ or more and 130 kg/m³ or less, and particularly preferably 90 kg/m³ or more and 130 kg/m³ or less. The bulk density of the expanded beads is preferably within the above range because an expanded beads molded article having excellent flame retardancy, a light weight, and an excellent fusion-bonding property can be obtained.

The bulk density of the expanded beads is measured with the following method. First, expanded beads to be measured are left for 24 hours or more in an environment of an air temperature of 23°C and a relative humidity of 50% at 1 atm to adjust the state. The expanded bead group with a mass of W (g) after the state adjustment is put into a measuring cylinder so that the expanded bead group deposits naturally, and the bottom surface of the measuring cylinder is lightly tapped several times against the horizontal plane to stabilize the height of the expanded bead group put in the measuring cylinder. The bulk volume V (L) of the expanded bead group indicated by the scale of the measuring cylinder is read, the mass W of the expanded bead group is divided by the bulk volume V of the expanded bead group (W/V), and the unit is converted to obtain the bulk density (kg/m³) of the expanded beads.

### High-temperature peak:

The polyolefin-based resin expanded beads of the present invention preferably have one or more melting peaks (high-temperature peaks) on the high temperature side from the melting peak intrinsic to the resin of the olefin-based resin (resin intrinsic peak) in a DSC curve obtained by differential scanning calorimetry (DSC) measured in accordance with JIS K 7122-2012.

These melting peaks can be obtained with the method described below. Specifically, 1 to 3 mg of the expanded beads are heated from 23°C to 200°C at a heating rate of 10°C/min with a differential scanning calorimeter to obtain a DSC curve, and the melting peaks (high-temperature peaks) can be confirmed from the DSC curve. The peak having the maximum amount of heat of fusion is taken as the melting peak intrinsic to the olefin-based resin (resin intrinsic peak), and a melting peak appearing on the high temperature side from the melting peak is taken as a high-temperature peak.

The DSC curve in this case means a DSC curve obtained by heating the expanded beads with the above-described measurement method. The DSC curve obtained by such heating may be referred to as a DSC curve in the first heating. The melting peak intrinsic to the resin (resin intrinsic peak) means an endothermic peak that is due to melting of a crystal intrinsic to the polyolefin-based resin constituting the expanded beads. The resin intrinsic peak is considered to be an endothermic peak caused by endotherm due to melting of a crystal that is usually included in the polyolefin-based resin constituting the expanded beads.

Meanwhile, the melting peak (high-temperature peak) on the high temperature side from the resin intrinsic peak is an endothermic peak appearing on the high temperature side from the resin intrinsic peak in the DSC curve in the first heating. In a case where this high-temperature peak appears, it is presumed that the resin includes a secondary crystal. In a DSC curve obtained by heating the expanded beads from 23°C to 200°C at a heating rate of 10°C/min (first heating), then cooling the expanded beads from 200°C to 23°C at a cooling rate of 10°C/min, and then heating the expanded beads again from 23°C to 200°C at a heating rate of 10°C/min (second heating), only a melting peak appears that is due to melting of a crystal and intrinsic to the polyolefin-based resin constituting the expanded beads. The DSC curve obtained by the second heating may be referred to as a DSC curve in the second heating. This resin intrinsic peak appears in both the DSC curve in the first heating and the DSC curve in the second heating, and the temperature at the peak top may be slightly different between the first heating and the second heating, and the difference is usually less than 5°C. Thus, it is possible to confirm which peak is the resin intrinsic peak. The expanded beads are preferably such that only a melting peak intrinsic to the polyolefin-based resin (intrinsic peak) appears in a DSC curve in the second heating obtained by heating the expanded beads from 23°C to 200°C at a heating rate of 10°C/min, then cooling the expanded beads from 200°C to 23°C at a cooling rate of 10°C/min, and then heating the expanded beads from 23°C to 200°C at a heating rate of 10°C/min.

Because a range of molding condition for obtaining a good expanded beads molded article at the time of in-mold molding of expanded beads becomes wider, the heat of fusion at the high-temperature peak of the polyolefin-based resin expanded beads of the present invention is preferably 5 J/g or more and 40 J/g or less, more preferably 6 J/g or more and 30 J/g or less, and still more preferably 7 J/g or more and 25 J/g or less.

The heat of fusion at the high-temperature peak is measured with the above-described method, and more specifically, can be measured with the method described in Examples.

### Average bead diameter of expanded beads:

From the viewpoint of enhancing the filling property into a mold, the average bead diameter of the expanded beads is preferably 0.3 mm or more and 8 mm or less, more preferably 0.5 mm or more and 5 mm or less, and still more preferably 0.8 mm or more and 4.5 mm or less.

The average bead diameter of the expanded beads is a value determined with the following method. First, the volume-based particle size distribution of the expanded beads is converted into a number-based particle size distribution on the assumption that the shape of a bead is a sphere, and thus the number-based particle size distribution is determined. Then, the bead diameters based on the number-based particle size distribution are arithmetically averaged, and thus the number-based arithmetic mean bead diameter can be obtained. The bead diameter means the diameter of a virtual sphere having the same volume as the bead. The volume-based particle size distribution of the expanded beads can be measured using a particle size distribution analyzer (for example, a dynamic image analysis particle shape and particle size distribution analyzer and analysis software (trade name: PartAn 3D) manufactured by MicrotracBEL) and the like. The number of expanded beads used for the measurement is to be, for example, 2000 or more.

### Average mass of expanded beads:

From the same viewpoint, the average mass of the expanded beads is preferably 0.2 mg or more and 5 mg or less, more preferably 0.5 mg or more and 4 mg or less, and still more preferably 0.8 mg or more and 3 mg or less. The average mass of the expanded beads can be determined by randomly selecting 100 or more expanded beads, measuring the mass [mg] of the expanded bead group, and dividing the mass by the number of the expanded beads used for the measurement.

### (Method of Producing Polyolefin-Based Resin Expanded Beads)

The expanded beads of the present invention are polyolefin-based resin expanded beads, the expanded beads include a polyolefin-based resin as the base material resin and contain a phosphonate ester-based compound and a NOR type hindered amine-based compound in a predetermined range.

The above-described problem generally occurs in a case where a polyolefin-based resin, a phosphonate ester, and a NOR type hindered amine-based compound are melt-kneaded. In order to prevent occurrence of such a problem, in the method of producing the expanded beads of the present invention, it is important that the above-described specific raw materials are contained and the resulting expanded beads have a closed cell rate adjusted to a predetermined range. An optional raw material may be appropriately contained. In view of the above, the method of producing the expanded beads of the present invention is not particularly limited. For example, the method of producing the expanded beads of the present invention can follow the production method 1 or the production method 2 described above. An example of a preferred method of producing the expanded beads of the present invention will be described below.

A preferred method of producing the expanded beads of the present invention includes: a resin beads production step of preparing resin beads containing a phosphonate ester-based compound and a NOR type hindered amine-based compound; a dispersion step of dispersing the resin beads in an aqueous dispersion medium containing an inorganic dispersant in a pressure vessel; a blowing agent impregnation step of impregnating the resin beads with a blowing agent in the pressure vessel; and an expanding step of releasing the resin beads containing the blowing agent together with the aqueous dispersion medium from the pressure vessel to expand the resin beads. These steps may be performed in this order, or a part or all of one step and the next step may be performed in an overlapping manner.

### (Resin Beads Production Step)

First, the resin beads production step is performed. Regarding the resin beads, first, a base material resin, a phosphonate ester-based compound, a NOR type hindered amine-based compound, and, as necessary, another resin, a polymer, and an optional additive are supplied into an extruder, and heated and kneaded to obtain a molten mixture. Then, the molten mixture is extruded from a pore of a nozzle attached to the tip of the extruder, and pelletized with any cutting method exemplified by a strand cutting method, a hot cutting method, and an underwater cutting method to prepare resin beads. In the case of producing resin beads having a multilayer structure, a production apparatus is preferably used that includes a core layer-forming extruder, a multilayer strand-forming die attached to the downstream side of the core layer-forming extruder, and a covering layer-forming extruder, and a specific example of the production apparatus will be confirmed in the description of Example 1 below.

The average mass per bead of the resin beads is preferably adjusted to 0.2 mg to 5 mg, more preferably 0.5 mg to 4 mg, and still more preferably 0.8 mg to 3 mg. Here, the average mass refers to the arithmetic mean value per bead obtained by measuring the mass of 100 randomly selected resin beads.

The outer shape of the resin bead is not particularly limited as long as a desired object of the present invention can be achieved, but in the strand cutting method, an outer shape is preferable that can be visually determined to be cylindrical. In a case where the outer shape of the resin bead is cylindrical, the bead diameter of the resin bead measured in the extrusion direction is preferably 0.1 mm to 3.0 mm, and more preferably 0.3 mm to 1.5 mm. The ratio of the length (bead diameter) of the resin bead in the extrusion direction to the maximum length (diameter) of the resin bead in the direction orthogonal to the extrusion direction (bead diameter/diameter) is preferably 0.5 to 5.0, and more preferably 1.0 to 3.0. A case where the ratio is in the above range is preferable because spherical expanded beads are easily obtained.

As described above, the following advantage in the production process can be obtained by adopting one or more of an aspect in which resin beads have a multilayer structure including a core layer and a covering layer covering the core layer, an aspect in which a linear polypropylene-based resin and a branched polypropylene-based resin and/or a polyethylene-based resin having low fluidity are blended as a base material resin of a foamed layer, and an aspect in which a conductive carbon material is blended in a foamed layer. That is, in the case of adopting at least one among these aspects, the bead shape of the resin beads can be effectively adjusted by appropriately adjusting the extrusion speed, the take-up speed, the cutting speed, and the like of the molten mixture at the time of strand cutting, and spherical expanded beads can be easily produced using the resin beads.

### (Dispersion Step)

Next, the dispersion step is performed in which the resin beads obtained as described above are dispersed in an aqueous dispersion medium in a pressure vessel.

The aqueous dispersion medium is a dispersion medium containing water as a main component. The proportion of water in the aqueous dispersion medium is preferably 70 mass% or more, more preferably 80 mass% or more, and still more preferably 90 mass% or more, and may be 100 mass%. Examples of the dispersion medium other than water in the aqueous dispersion medium include at least one of ethylene glycol, glycerin, methanol, ethanol, or the like.

In the dispersion step, a dispersant is preferably added into the aqueous dispersion medium so that the resin beads heated in the vessel are not fused to each other. The dispersant may be any dispersant as long as it prevents fusion of the resin beads in the vessel. As the dispersant, either an organic dispersant or an inorganic dispersant can be used, but an inorganic dispersant is preferably used, and a fine particulate inorganic dispersant is more preferably used from the viewpoint of ease of handling. Examples of the dispersant include natural or synthetic clay minerals such as kaolin, mica, and clay, aluminum oxide, titanium oxide, basic magnesium carbonate, basic zinc carbonate, calcium carbonate, and iron oxide, and one of these may be used, or two or more thereof may be used in combination. Among them, natural or synthetic clay minerals are preferably used as a dispersant. The amount of the dispersant added is preferably 0.001 parts by mass to 5 parts by mass with respect to 100 parts by mass of the resin beads.

In the case of using a dispersant, an anionic surfactant exemplified by sodium dodecylbenzene sulfonate, a sodium alkyl sulfonate, and sodium oleate is preferably used as a dispersion auxiliary agent in combination with the dispersant. Into the aqueous dispersion medium, 0.001 parts by mass to 1 part by mass of the dispersion auxiliary agent is preferably added with respect to 100 parts by mass of the resin beads.

### (Blowing Agent Impregnation Step)

The blowing agent impregnation step is performed after the dispersion step or in an overlapping manner with the dispersion step. The blowing agent for expansion of the resin beads used in the blowing agent impregnation step is preferably a physical blowing agent. Examples of the physical blowing agent include inorganic physical blowing agents and organic physical blowing agents, and examples of the inorganic physical blowing agents include carbon dioxide, air, nitrogen, helium, and argon. Examples of the organic physical blowing agents include aliphatic hydrocarbons such as propane, n-butane, i-butane, n-pentane, i-pentane, hexane, cyclopentane, and cyclohexane and halogenated hydrocarbons such as chlorofluoromethane, trifluoromethane, 1,1-difluoroethane, 1-chloro-1,1-difluoroethane, 1,1,1,2-tetrafluoroethane, methyl chloride, ethyl chloride, and methylene chloride. These physical blowing agents may be used singly or in combination of two or more kinds thereof as the blowing agent. An inorganic physical blowing agent and an organic physical blowing agent can be used in combination. The blowing agent is preferably an inorganic physical blowing agent, and more preferably carbon dioxide from the viewpoint of load on the environment and the viewpoint of enhancing the flame retardancy of the expanded beads molded article.

The amount of the blowing agent added with respect to 100 parts by mass of the resin beads is preferably 0.1 parts by mass to 30 parts by mass, and more preferably 0.5 parts by mass to 15 parts by mass.

As the method of impregnating the resin beads with the blowing agent, a method is preferably used in which the resin beads are dispersed in an aqueous dispersion medium in a pressure vessel, then the blowing agent is forced into the pressure vessel under pressure, and the inside of the pressure vessel is kept at a predetermined temperature and a predetermined pressure to impregnate the resin beads with the blowing agent.

### (Expanding Step)

The pressure (internal pressure) in the pressure vessel during expansion, that is, the lower limit of the pressure in the pressure vessel immediately before the resin beads are released together with the aqueous dispersion medium is preferably 0.5 MPa (G) or more, and more preferably 0.8 MPa (G) or more. The upper limit is preferably 4 MPa (G) or less, and more preferably 3 MPa (G) or less. Within the above range, desired expanded beads can be safely produced without possibility of breakage of the pressure vessel, explosion, or the like. After the pressure is adjusted to the above pressure, the resin beads containing the blowing agent are released together with the aqueous dispersion medium from the inside of the pressure vessel to an atmosphere having a pressure lower than the pressure inside the pressure vessel (for example, atmospheric pressure), and thus expanded.

Before the expanding step is performed, the temperature in the pressure vessel is preferably raised to 100°C or higher and 200°C or lower, and more preferably 120°C or higher and 160°C or lower, and the temperature is preferably kept for a time in the range of 5 minutes or more and 30 minutes or less. Thus, the crystalline state of the resin beads can be adjusted to a state showing the high-temperature peak.

Note that expanded beads having a higher expansion ratio (lower bulk density) can also be obtained by pressure-treating the polyolefin-based resin expanded beads obtained as described above with air or the like to increase the pressure (internal pressure) in the cells of the foamed layer and then heating the polyolefin-based resin expanded beads with steam or the like for further expansion (two-stage expansion).

### (Polyolefin-Based Resin Expanded Beads Molded Article)

The expanded beads molded article of the present invention can be obtained by in-mold molding using the expanded beads of the present invention produced as described above. For example, the expanded beads molded article is produced as follows. First, the expanded beads of the present invention are put into a mold having a cavity corresponding to a desired shape of the expanded beads molded article, and the expanded beads put in the mold are heated. The expanded beads in the cavity are softened by heating, secondary expansion occurs, and surfaces of the expanded beads melt and fuse to each other. Thus, the expanded beads are integrated with each other, and an expanded beads molded article according to the shape of the cavity is obtained. Examples of the method of heating the expanded beads include a method in which a heating medium such as steam is introduced into the mold and the expanded beads are heated by the heating medium, a method in which the expanded beads are heated by irradiating the expanded beads with an electromagnetic wave such as a microwave, and a method in which both these methods are combined. As the method of putting the expanded beads into the mold, a known method can be adopted. Examples of the known method include a pressure filling method, a compression filling method, and a cracking filling method. The pressure filling method is a method in which expanded beads are subjected to a pressure treatment with a pressurized gas to apply a predetermined internal pressure to the expanded beads and then the expanded beads are put into a mold. The compression filling method is a method in which expanded beads that are compressed with pressurized gas are put into a pressurized mold and then the pressure in the mold is released. The cracking filling method is a method in which a mold is opened in advance to expand a molding space before putting expanded beads into the mold, the expanded beads are put into the mold, and then the mold is closed to mechanically compress the expanded beads. These filling methods may be performed singly or in combination.

In the in-mold molding, for the purpose of improving the secondary foamability at the time of heating the expanded beads, the expanded beads may be put into the mold in a state where the pressure in the cells of the expanded beads is increased by applying an internal pressure to the expanded beads before being put into the mold. The pressure (internal pressure) in the cells can be measured with, for example, the method described in JP 2003-201361 A.

The density of the expanded beads molded article of the present invention is preferably 30 kg/m³ or more, more preferably 50 kg/m³ or more, still more preferably 70 kg/m³ or more, still even more preferably 80 kg/m³ or more, and particularly preferably 90 kg/m³ or more. Furthermore, the density is preferably 200 kg/m³ or less, more preferably 180 kg/m³ or less, still more preferably 150 kg/m³ or less, and still even more preferably 130 kg/m³ or less. In other words, the density is more preferably 30 kg/m³ or more and 200 kg/m³ or less, still more preferably 50 kg/m³ or more and 180 kg/m³ or less, still even more preferably 70 kg/m³ or more and 150 kg/m³ or less, still even more preferably 80 kg/m³ or more and 130 kg/m³ or less, and still even more preferably 90 kg/m³ or more and 130 kg/m³ or less. The expanded beads molded article is preferable because it has excellent flame retardancy, a light weight, and an excellent fusion-bonding property.

The expanded beads molded article obtained by in-mold molding of the expanded beads of the present invention exhibits high flame retardancy and has an excellent fusion-bonding property and an excellent surface property, and thus the expanded beads molded article is suitably used for applications requiring high flame retardancy, such as protective materials for on-vehicle batteries and electronic components.

### Examples

Hereinafter, the present invention will be described in detail with reference to Examples, but the present invention is not limited thereto.

Tables 1 to 3 show the composition, the amount of blending, the ratio of blending, and the expansion conditions regarding the resin beads used for producing expanded beads of each of Examples and Comparative Examples, and the molding pressure of the expanded beads molded article, and also show the evaluation results and the like of each of Examples and Comparative. Tables 1 to 3 also show the ratio of the amount (parts by mass) of the phenolic antioxidant blended to the amount (parts by mass) of the NOR type hindered amine-based compound blended in the core layer, the ratio of the amount (parts by mass) of the sulfur-based antioxidant blended to the amount (parts by mass) of the NOR type hindered amine-based compound blended in the core layer, the total amount (mass%) of the phosphonate ester-based compound blended in 100 mass% of the resin beads, and the ratio of the amount (mass%) of the NOR type hindered amine-based compound blended to the amount (mass%) of the phosphonate ester-based compound blended in the resin beads.

In Tables of Examples, it should be understood that the amount of each composition blended is the same as the content of each raw material contained in the core layer, the covering layer, and the expanded beads.

Various raw materials used in Examples and Comparative Examples are as follows. In Examples and Comparative Examples shown below, both the resins blended in the core layer and the covering layer were a polyolefin-based resin, and other resins and other polymers were not used. In each of Examples and Comparative Examples, the amount of the polyolefin-based resin blended in the core layer and the covering layer was 100 parts by mass.

### (Resin)

### · Polypropylene-based resin (PP1)

Ethylene-propylene random copolymer (linear propylene-based random copolymer), melting point: 143°C, density: 0.900 g/cm³, ethylene component amount: 2.1 mass%, MFR (load: 2.16 kg, 230°C, JIS K 7210-1:2014): 6 g/10 min.

### · Polypropylene-based resin (PP2)

Ethylene-propylene random copolymer (linear propylene-based random copolymer), melting point: 133°C, density: 0.900 g/cm³, ethylene component amount: 3.5 mass%, MFR (load: 2.16 kg, 230°C, JIS K 7210-1:2014): 6 g/10 min.

### · Polypropylene-based resin (PP3)

Branched polypropylene, melting point: 159°C, density: 0.905 g/cm³, MFR (load: 2.16 kg, 230°C, JIS K 7210-1:2014): 1.7 g/10 min.

### · Polyethylene-based resin (PE1)

Linear low density polyethylene, melting point: 120°C, density: 0.923 cm/cm³, MFR (load: 2.16 kg, 190°C, JIS K 7210-1:2014): 1.5 g/10 min.

### (Phosphonate Ester-Based Compound)

A compound manufactured by THOR (trade name "Aflammit PCO 900", melting point: 240°C) and represented by the following formula (6) was used as a cyclic phosphonate ester-based compound. In Tables, such a compound is described as phosphonate ester.

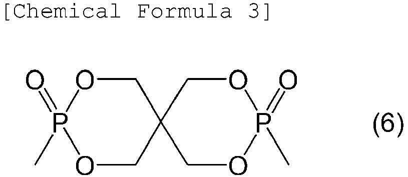

### (NOR Type Hindered Amine-Based Compound)

A compound manufactured by BASF (trade name "Flamestab NOR 116", molecular weight: 2261) and represented by the following formula (7) was used as a NOR type hindered amine-based compound. In Tables, such a compound is described as NOR type hindered amine.

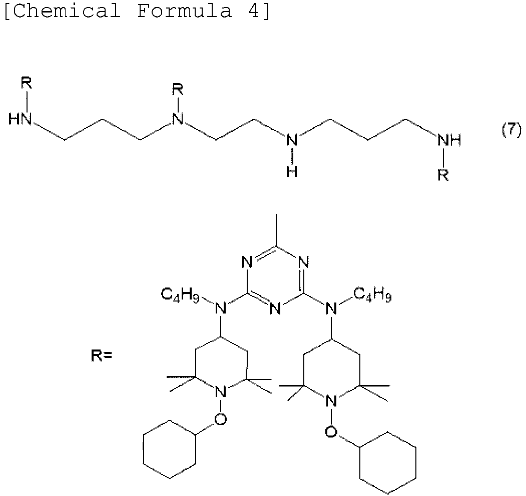

### (Phenolic Antioxidant)

A compound manufactured by BASF (trade name "Irganox 1330", melting point: 245°C) and represented by the following formula (8) was used as a phenolic antioxidant.

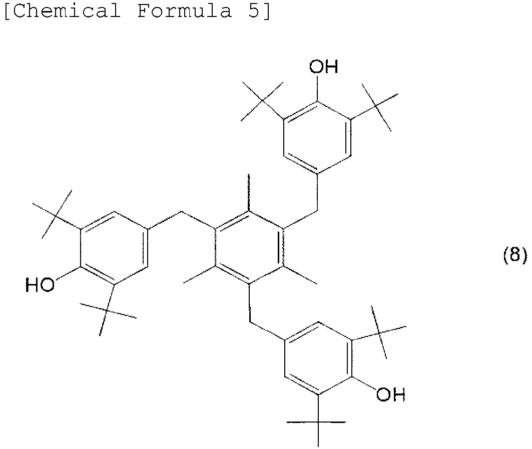

### (Sulfur-Based Antioxidant)

Dioctadecyl-3,3'-thiodipropionate manufactured by BASF (trade name "Irganox PS 802") was used as a sulfur-based antioxidant.

### <Example 1>

### (Preparation of Resin Beads)

A production apparatus was prepared that included a core layer-forming extruder having an inner diameter of 50 mm, a multilayer strand-forming die attached to the downstream side of the core layer-forming extruder, and a covering layer-forming extruder having an inner diameter of 30 mm. In the production apparatus, the downstream side of the covering layer-forming extruder was connected to the multilayer strand-forming die, and the production apparatus had a configuration that enabled a molten mixture to be layered for forming each layer in the die, and enabled co-extrusion.

As the base material resin of the core layer, PP1 was used. As core layer forming materials constituting the core layer, in addition to the above-described resin, a phosphonate ester-based compound, a NOR type hindered amine-based compound, a phenolic antioxidant, a sulfur-based antioxidant, and zinc borate as a cell controlling agent were supplied to the extruder so as to be blended in amounts described in Table 1, and these were melted and kneaded to prepare a molten mixture. The core layer in the resin beads is a layer that serves as a foamed layer of the expanded beads produced as described below.

As the base material resin of the covering layer, PP2 was used, and PP2 was supplied to the covering layer-forming extruder and melted and kneaded to prepare a molten mixture.

The molten mixtures, for formation of layers, obtained by melting and kneading as described above were introduced into the multilayer strand-forming die and joined in the die. Then, a multilayer strand having a two-layer structure having a core layer and a covering layer covering the side peripheral surface of the core layer (covering layer/core layer) was extruded from a circular pore of 2 mm of a nozzle attached to the downstream side of the die. The extruded multilayer strand was cooled with water in a water tank while being taken up, and cut with a pelletizer so that the resin beads had a length of 2 mm to obtain resin beads having an average mass of 1.0 mg per bead.

### (Preparation of Expanded Beads)

Into a pressure vessel having an internal volume of 100 L, 2 kg of the resin beads obtained as described above were supplied together with 75 L of water as an aqueous dispersion medium. Into the pressure vessel, kaolin (65g) as an inorganic dispersant and a surfactant (trade name: NEOGEN, manufactured by DKS Co. Ltd., sodium dodecylbenzene sulfonate) (43g in terms of active ingredient) were each added.

Next, carbon dioxide as a blowing agent was injected into the pressure vessel under pressure, and pressurized until the gauge pressure reached 0.5 MPa (G). The pressure shown with the sign (G) is a gauge pressure, that is, a value of a pressure based on the atmospheric pressure. Then, the temperature was raised to the expansion temperature shown in Table 1 at a heating rate of 2°C/min while the inside of the pressure vessel was stirred, and carbon dioxide was further injected under pressure until the expansion pressure shown in Table 1 was reached. Then, the inside of the pressure vessel was kept at the same temperature and the same pressure for 15 minutes. Thus, adjustment was performed so that a high-temperature peak appeared in an endothermic curve obtained by DSC measurement of the resulting expanded beads.

Then, the resin beads and the aqueous dispersion medium, which were the contents of the pressure vessel, were released under atmospheric pressure to expand the core layer, and thus expanded beads were obtained that had a multilayer structure including a foamed layer and a covering layer being in a non-foamed state and covering the foamed layer. The expansion pressure in the pressure vessel immediately before expansion was a value shown in Table 1.

The obtained expanded beads were left in an oven at 80°C for 24 hours or more to sufficiently dry the expanded beads. At this time, the water content of the expanded beads after drying was measured. In the measurement of the water content, the expanded beads after drying were left at room temperature for 30 minutes, then about 200 cm³ of an expanded bead group after drying was measured out, and the expanded bead group was weighed. Next, the expanded bead group weighed above was further heated in an oven at 150°C for 1 hour, and then the expanded bead group after heating was weighed. The weight of the expanded bead group after heating was subtracted from the weight of the expanded bead group before heating, and the difference in weight obtained as described above was divided by the weight of the expanded bead group after heating, and then the quotient was converted into a percentage. In the present Example, the value obtained by measuring the water content was 0.8%.

### (Production of Expanded Beads Molded Article)

The expanded beads to which no internal pressure was applied after completion of drying were put into a mold having a molding cavity enabling molding of a flat plate-shaped molded article having a size of 400 mm (length) × 300 mm (width) × 30 mm (height) by compression filling. As the mold, a metal mold was used. The compression filling is a method in which expanded beads that are compressed are put into mold. Then, steam was supplied into the mold to heat the expanded beads, and thus a flat plate-shaped expanded beads molded article was obtained. Heating with steam was performed as follows. First, in a state where drain valves provided on both surfaces of the mold were opened, steam was supplied into the mold to perform preheating (exhaust step). Then, steam was supplied from one side of the mold for heating, and steam was further supplied from the other side of the mold for heating. Subsequently, steam was supplied from both sides of the mold for heating until the inside of the mold reached a molding pressure described in Table 1. After completion of the heating, the pressure was released, and the mold was cooled with water until the pressure generated on the molding surface of the mold reached 0.04 MPa (G), then the mold was opened, and an expanded beads molded article was ejected.

The obtained molded article was aged in an oven at 80°C for 12 hours and then slowly cooled to room temperature to obtain an expanded beads molded article.

### <Examples 2 to 8>

Expanded beads and expanded beads molded articles were produced in the same manner as in Example 1 except that the contents were changed to those shown in Tables 1 and 2.

### <Examples 9 and 10 and Comparative Examples 1, 5, and 6>

An extruder was prepared that had an inner diameter of 50 mm and was provided with a strand-forming die on the outlet side. A polyolefin-based resin, a phosphonate ester-based compound, a NOR type hindered amine-based compound, a phenolic antioxidant, a sulfur-based antioxidant, and a cell controlling agent were supplied to the extruder so as to be blended in amounts described in Tables 2 and 3, and these were melted and kneaded to form a molten mixture. In Example 9, 80 parts by mass of PP1 and 20 parts by mass of PE1 were used as 100 parts by mass of the polyolefin-based resin. In Example 10, 80 parts by mass of PP1 and 20 parts by mass of PP3 were used as 100 parts by mass of the polyolefin-based resin.

The obtained molten mixture was extruded from the strand-forming die into a strand shape, cooled with water, and cut with a pelletizer to obtain resin beads having an average mass of 1.0 mg per bead.

Using the resin beads obtained as described above, expanded beads and expanded beads molded articles were produced in the same manner as in the method of producing expanded beads and an expanded beads molded article in Example 1 except that the contents were changed to those shown in Tables 2 and 3.

### <Comparative Examples 2 to 4>

Expanded beads were produced in the same manner as in the method of producing expanded beads in Comparative Example 1 except that the contents were changed to those shown in Table 3.

Expanded beads molded articles were produced in the same manner as in the method of producing an expanded beads molded article in Example 1 except that the pressure in the cells of the expanded beads obtained as described above was increased to 0.1 MPa (G) and then the expanded beads were compressed and put into the mold, and that molding was performed under conditions shown in Table 3.

### <Example 11>

Expanded beads and an expanded beads molded article were produced in the same manner as in Example 9 except that 3 parts by mass of oil furnace black (product name: KETJENBLACK (registered trademark) EC300J (manufactured by Lion Corporation), amount of DBP absorbed: 360 cm³/100 g, particle size: 40 nm) was used as a conductive carbon material with respect to 100 parts by mass of the resin, and that the contents were changed to those in Table 2.

The resin beads, the expanded beads, and the expanded beads molded articles obtained as described above were measured or evaluated as follows. Tables 1 to 3 show the results.

### <Average of Long Diameter of Cut Surface/Short Diameter of Cut Surface of Resin Beads>

A resin bead was cut from a direction orthogonal to the extrusion direction at the time of producing the resin bead to form a cut surface passing through the center of the resin bead. In the cut surface, the long diameter and the short diameter passing through the center and shown in the direction orthogonal to the long diameter were measured using a microscope. This measurement was performed on 20 resin beads, the value of long diameter of cut surface/short diameter of cut surface of each resin bead was determined, and the values were arithmetically averaged to determine the average of long diameter of cut surface/short diameter of cut surface of the resin beads.

### <Heat of Fusion at High-Temperature Peak of Expanded Beads>

The heat of fusion at the high-temperature peak of the expanded beads was measured by heat-flux differential scanning calorimetry in accordance with JIS K 7122-2012. Specifically, about 2 mg of expanded beads were collected and subjected to heating scan from 23°C to 200°C at 10°C/min with a differential scanning calorimeter (DSC 7020 manufactured by Hitachi High-Tech Science Corporation) to obtain a DSC curve having two or more melting peaks. A resin intrinsic peak in the following description is denoted by A, and a high-temperature peak appearing on the high temperature side from A is denoted by B.

A straight line (α-β) was drawn that connected the point α corresponding to 80°C on the DSC curve and the point β corresponding to the end temperature T of melting of the expanded beads on the DSC curve. The end temperature T of melting is the temperature at the end point of the high temperature side of the high-temperature peak B, and is the temperature at the intersection of the high-temperature peak B and the baseline on the high temperature side. Next, a straight line parallel to the vertical axis of the graph was drawn from the point γ corresponding to the valley between the resin intrinsic peak A and the high-temperature peak B on the DSC curve, and the point intersecting the straight line (α-β) was denoted by δ. The area of the high-temperature peak B is the area of a portion surrounded by the curve of the high-temperature peak B portion of the DSC curve, the line segment (δ-β), and the line segment (γ-δ), and the area was taken as the heat of fusion at the high-temperature peak.

### <Bulk Density of Expanded Beads>

The expanded beads were aged as described above, then an expanded bead group with a mass of W (g) was put into a measuring cylinder so that the expanded bead group deposited naturally, and the bottom surface of the measuring cylinder was lightly tapped several times against the horizontal plane to stabilize the height of the expanded bead group put in the measuring cylinder. The bulk volume V (L) of the expanded bead group indicated by the scale of the measuring cylinder was read, the mass W of the expanded bead group was divided by the bulk volume V of the expanded bead group (W/V), and the unit was converted to [kg/m³] to determine the bulk density of the expanded beads.

### <Closed Cell Rate of Expanded Beads>

An expanded bead group having a bulk volume of about 20 cm³ was immersed in water, and thus the apparent volume Va of the expanded bead group was measured. Next, the expanded bead group having the apparent volume Va measured was sufficiently dried, and then the true volume Vx of the expanded beads was measured in accordance with Procedure C described in ASTM D2856-70. Here, the true volume Vx of the expanded beads is the sum of the volume of the resin constituting the expanded beads and the total cell volume of the closed cell portion in the expanded beads.

For the measurement of the true volume Vx, an air comparison pycnometer (air comparison pycnometer "930" manufactured by Toshiba Beckman CO., LTD.) was used. Next, the closed cell rate was calculated with the following equation (1). The closed cell rate was measured five times using different measurement samples with the same procedure as described above, and the arithmetic mean value of the values obtained in the measurement was determined, and was taken as the closed cell rate of the expanded beads.
[Mathematical 2] $Closed cell rate \left(%\right) = \left(Vx-W/ρ\right) \times 100 / \left(Va-W/ρ\right)$ (1)
Vx: true volume (cm³) of expanded bead group measured with above method
Va: apparent volume (cm³) of expanded bead group measured from increase in water level at time of immersing expanded bead group in water in measuring cylinder
W: mass (g) of expanded bead group
ρ: density (g/cm³) of resin constituting expanded beads

### <Average of Long Diameter of Expanded Beads/Short Diameter of Expanded Beads>

Measurement and analysis were performed using a dynamic image analysis particle shape and particle size distribution analyzer and analysis software (trade name: PartAn 3D, software version: 7.1.3.80) manufactured by MicrotracBEL. About 2000 expanded beads obtained as described above were supplied as samples to the analyzer , and three-dimensional image analysis was performed. The long diameter and the short diameter of one expanded bead were measured, and the ratio of the long diameter to the short diameter of the expanded bead was calculated. The long diameter of one expanded bead is the maximum value of the diameter at which the distance obtained by image analysis between two parallel lines sandwiching the one bead is maximum. The short diameter of one expanded bead is the minimum value of the diameter at which the distance between two parallel lines sandwiching the one bead is minimum. The value obtained by arithmetically averaging the ratios of the supplied expanded beads was taken as the average of long diameter of expanded beads/short diameter of expanded beads. In the measurement method using the present analyzer, the long diameter of the expanded bead corresponds to Feret length, and the short diameter of the expanded bead corresponds to Feret thickness.

### <Density of Expanded Beads Molded Article>

The mass of the obtained expanded beads molded article was divided by the volume calculated on the basis of the dimension to calculate the density (kg/m³) of the expanded beads molded article.

### <Evaluation of Fusion-Bonding Property of Expanded Beads Molded Article>

The expanded beads molded article was bent to be broken, the number (C1) of expanded beads present on the fracture surface and the number (C2) of broken expanded beads on the fracture surface were counted, and the ratio of the number of broken expanded beads on the fracture surface to the number of expanded beads present on the fracture surface [(C2/C1) × 100] was calculated as the material fracture rate.

The measurement was performed five times using different test pieces, the material fracture rates of the test pieces were determined and arithmetically averaged, and the obtained arithmetic mean value was evaluated in accordance with the following evaluation criteria. The higher the material fracture rate is, the more excellent the fusion-bonding property is.
A: The material fracture rate is 70% or more.
B: The material fracture rate is 50% or more and less than 70%.
C: The material fracture rate is less than 50%.

### <Evaluation of Surface Property of Expanded Beads Molded Article>

In evaluation of the surface appearance, a range of 100 mm × 100 mm was cut out as a test piece from the central part of the expanded beads molded article, a line was drawn diagonally from a corner of the test piece, and the number of voids (gaps) having a size of 1 mm² or more on the line was counted and evaluated as follows.
Good: The number of voids is less than 10.
Bad: The number of voids is 10 or more.

### <Evaluation of Flame Retardancy of Expanded Beads Molded Article>

### UL 94 V test (rating):

The flame retardancy of the expanded beads molded article was evaluated from the result of a vertical burning test (20 mm Vertical Burning Test) performed in accordance with the UL 94 standard. The specific test method is as follows.

### (Preparation of Measurement Sample)

From the vicinity of the central part of the expanded beads molded article, 5 test pieces having dimensions of 125 mm in length, 13 mm in width, and 13 mm in thickness were cut out so that all surfaces of a test piece were cut out surfaces.

### (Test Method)

The upper part of the test piece was fixed with a fixing clamp to maintain the longitudinal direction of the test piece vertically, and absorbent cotton was placed below the test piece. The lower end of the test piece was brought into contact with a flame using a burner for 10 seconds, then, the burner was moved away from the test piece, and the burning time (first burning time) until stop of the burning of the test piece was measured. Again, the lower end of the test piece was brought into contact with a flame for 10 seconds, then the burner was moved away from the test piece, and the burning time (second burning time) and the afterglow time (second afterglow time) until stop of the burning of the test piece were measured. The test was performed on each of the five test pieces, and thus the flame retardancy of the expanded beads molded article was evaluated. Here, the burning time refers to the continuous time during which the test piece is in a burning state such that the flame from the test piece is visually observable. The burning refers to a state in which the surface part of the test piece and the gas in the vicinity of the surface part of the test piece are burnt and thus the flame is visually observed from the test piece. The afterglow time refers to the time during which the test piece is in glow after the end of the burning state in which the flame is visually observed. The glow refers to a state in which only the surface part of the test piece is burnt and thus no flame is visually observed and the glow state of the test piece surface can be visually observed.

### (Evaluation Criteria)

The test was performed 5 times on 5 test pieces of each molded article, and evaluation was performed in accordance with the standards of V-0, V-1, and V-2 of the UL 94 standard. A test piece that did not satisfy V-0, V-1, and V-2 of the UL 94 standard was evaluated as a failure. In evaluation of flame retardancy, the flame retardancy indicated by V-0, V-1, and V-2 is higher in this order. A test piece that satisfied both the evaluation criteria of V-0 and V-1 was rated as V-0, and a test piece that satisfied only the evaluation criterion of V-1 was rated as V-1.

### V-0:

The first burning time and the second burning time of each test are each 10 seconds or less,
the sum of the first burning times and the second burning times of the tests, that is, the sum of the burning times of 10 tests is less than 50 seconds,
the sum of the second burning time and the second afterglow time of each test is 30 seconds or less,
burning of the test piece does not reach the fixing clamp in all of the tests, and
the absorbent cotton placed below the test piece is not burnt by a dropped material dropped due to burning of the test piece in all of the tests.

### V-1:

The first burning time and the second burning time of each test are each 30 seconds or less,
the sum of the first burning times and the second burning times of the tests, that is, the sum of the burning times of 10 tests is less than 250 seconds,
the sum of the second burning time and the second afterglow time of each test is 60 seconds or less,
burning of the test piece does not reach the fixing clamp in all of the tests, and
the absorbent cotton placed below the test piece is not burnt by a dropped material dropped due to burning of the test piece in all of the tests.

### V-2:

The first burning time and the second burning time of each test are each 30 seconds or less,
the sum of the first burning times and the second burning times of the tests, that is, the sum of the burning times of 10 tests is less than 250 seconds,
the sum of the second burning time and the second afterglow time of each test is 60 seconds or less,
burning of the test piece does not reach the fixing clamp in all of the tests, and
the absorbent cotton placed below the test piece is burnt by a dropped material dropped due to burning of the test piece in at least one of the tests.

**[Table 1]**

| | | | | Example 1 | Example 2 | Example 3 | Example 4 | Example 5 |
|---|---|---|---|---|---|---|---|---|
| Resin beads | Covering layer | Covering layer | | Present | Present | Present | Present | Present |
| | | Polyolefin-based resin | | PP2 | PP2 | PP2 | PP2 | PP2 |
| | Core layer | Polyolefin-based resin: 100 parts by mass | | PP1 | PP1 | PP1 | PP1 | PP1 |
| | | Phosphonate ester | Parts by mass | 15,5 | 15,5 | 15,5 | 13,5 | 15,5 |
| | | NOR type hindered amine | Parts by mass | 3,6 | 3,6 | 3,6 | 3,6 | 1,1 |
| | | Phenolic antioxidant | Parts by mass | 0,1 | 0,1 | 0,1 | 0,1 | 0,1 |
| | | Sulfur-based antioxidant | Parts by mass | 0,1 | 0,1 | 0,1 | 0,1 | 0,1 |
| | | Another additive | Cell controlling agent: parts by mass | 0,05 | 0,05 | 0,05 | 0,05 | 0,05 |
| | | | Conductive carbon material: parts by mass | - | - | - | - | - |
| | | Phenolic antioxidant/NOR type hindered amine-based compound | | 0,03 | 0,03 | 0,03 | 0,03 | 0,09 |
| | | Sulfur-based antioxidant/NOR type hindered amine-based compound | | 0.03 | 0.03 | 0.03 | 0.03 | 0,09 |
| | Total amount (mass%) of the phosphonate ester blended in 100 mass% of resin beads | | | 12,6 | 11,9 | 11,0 | 9,8 | 11,3 |
| | Total amount (mass%) of NOR type hindered amine-based compound blended in 100 mass% of resin beads | | | 2,9 | 2,8 | 2,6 | 2,6 | 0,8 |
| | NOR type hindered amine-based compound/phosphonate ester | | | 0,23 | 0,23 | 0,23 | 0,27 | 0,07 |
| | Foamed layer (parts by mass) : Covering layer (parts by mass) | | | 97:3 | 92:8 | 85:15 | 85:15 | 85:15 |
| | Resin bead length (mm) | | | 2,0 | 2,0 | 2,0 | 2,0 | 2,0 |
| | Average of long diameter of cut surface/short diameter of cut surface | | | 1,1 | 1,1 | 1,3 | 1,2 | 1,2 |
| Expanded beads | Expansion temperature (°C) | | | 153 | 153 | 154 | 154 | 154 |
| | Expansion pressure (MPa(G)) | | | 1,2 | 1,2 | 1,0 | 1,0 | 1,1 |
| | Heat of fusion at high-temperature peak (J/g) | | | 13 | 13 | 14 | 15 | 13 |
| | Bulk density (kg/m³) | | | 92 | 94 | 97 | 91 | 98 |
| | Closed cell rate (%) | | | 74 | 76 | 82 | 77 | 84 |
| | Average of long diameter of expanded beads/short diameter of expanded beads | | | 1,6 | 1,5 | 1,6 | 1,8 | 1,6 |
| Expanded beads molded article | Molding pressure (MPa(G)) | | | 0,32 | 0,32 | 0,32 | 0,32 | 0,32 |
| | Density (kg/m³) | | | 110 | 115 | 120 | 110 | 180 |
| | Fusion-bonding property | | | B | A | A | A | A |
| | Surface property | | | Good | Good | Good | Good | Good |
| | UL 94 V test rating | | | V-2 | V-2 | V-0 | V-0 | V-0 |

**[Table 2]**

| | | | | Example 6 | Example 7 | Example 8 | Example 9 | Example 10 | Example 11 |
|---|---|---|---|---|---|---|---|---|---|
| Resin beads | Covering layer | Covering layer | | Present | Present | Present | Absent | Absent | Absent |
| | | Polyolef in-based resin | | PP2 | PP2 | PE1 | - | - | - |
| | Core layer | Polyolef in-based resin: 100 parts by mass | | PP1 | PP1 | PE1 | PP1+PE1 | PP1+PP3 | PP1 |
| | | Phosphonate ester | Parts by mass | 22,1 | 9,2 | 15,5 | 18,3 | 18,3 | 18,8 |
| | | NOR type hindered amine | Parts by mass | 0,6 | 4,8 | 3,6 | 3,7 | 3,7 | 3,8 |
| | | Phenolic antioxidant | Parts by mass | 0,1 | 0,1 | 0,1 | 0,1 | 0,1 | 0,1 |
| | | Sulfur-based antioxidant | Parts by mass | 0,1 | 0,1 | 0,1 | 0,1 | 0,1 | 0,1 |
| | | Another additive | Cell controlling agent: parts by mass | 0,05 | 0,05 | 0,05 | 0.05 | 0,05 | 0,05 |
| | | | Conduct ive carbon material: parts by mass | - | - | - | - | - | 3,0 |
| | | Phenolic antioxidant/NOR type hindered amine-based compound | | 0,17 | 0,02 | 0,03 | 0,03 | 0,03 | 0,03 |
| | | Sulfur-based antioxidant/NOR type hindered amine-based compound | | 0.17 | 0.02 | 0.03 | 0.03 | 0.03 | 0.03 |
| | Total amount (mass%) of phosphonate ester blended in 100 mass% of resin beads | | | 15,3 | 6,8 | 12,6 | 15,0 | 15,0 | 14,9 |
| | Total amount (mass%) of NOR type hindered amine-based compound blended in 100 mass% of resin beads | | | 0,4 | 3,6 | 2,9 | 3,0 | 3,0 | 3,0 |
| | NOR type hindered amine-based compound/phosphonate ester | | | 0.03 | 0.52 | 0,23 | 0.20 | 0.20 | 0.20 |
| | Foamed layer (parts by mass) : Covering layer (parts by mass) | | | 85:15 | 85:15 | 97:3 | - | - | - |
| | Resin bead length (mm) | | | 2,0 | 2,0 | 2,0 | 2,0 | 2,0 | 2,0 |
| | Average of long diameter of cut surface/short diameter of cut surface | | | 1,3 | 1,4 | 1,3 | 1,1 | 1,1 | 1,3 |
| Expanded beads | Expansion temperature (°C) | | | 151 | 153 | 122 | 151 | 157 | 153 |
| | Expansion pressure (MPa(G)) | | | 2,4 | 1,1 | 4,0 | 1,7 | 1,2 | 0.9 |
| | Heat of fusion at high-temperature peak (J/g) | | | 15 | 14 | 14 | 16 | 17 | 14 |
| | Bulk density (kg/m³) | | | 70 | 104 | 100 | 69 | 69 | 82 |
| | Closed cell rate (%) | | | 81 | 67 | 83 | 73 | 68 | 62 |
| | Average of long diameter of expanded beads/short diameter of expanded beads | | | 1,5 | 2,2 | 1,4 | 1,6 | 1,9 | 2,3 |
| Expanded beads molded article | Molding pressure (MPa(G)) | | | 0,32 | 0,32 | 0,26 | 0,32 | 0,32 | 0,32 |
| | Density (kg/m³) | | | 110 | 140 | 145 | 120 | 100 | 120 |
| | Fusion-bonding property | | | A | B | A | B | B | B |
| | Surface property | | | Good | Good | Good | Good | Good | Good |
| | UL 94 V test rating | | | V-2 | V-2 | V-2 | V-2 | V-2 | V-2 |

**[Table 3]**

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Resin beads | Covering layer | Covering layer | | Absent | Absent | Absent | Absent | Absent | Absent |
| | | Polyolefin-based resin | | - | - | - | - | - | - |
| | Core layer | Polyolefin-based resin: 100 parts by mass | | PP1 | PP1 | PP1 | PP1 | PP1 | PP1 |
| | | Phosphonate ester | Parts by mass | 15,5 | 15,9 | 18,3 | 22,8 | 2,8 | 7,0 |
| | | NOR type hindered amine | Parts by mass | 3,6 | 6,1 | 3,7 | 3,8 | 1,9 | 4,0 |
| | | Phenolic antioxidant | Parts by mass | 0,1 | 0,1 | 0,1 | 0,1 | 0,1 | 0,1 |
| | | Sulfur-based antioxidant | Parts by mass | 0,1 | 0,1 | 0,1 | 0,1 | 0,1 | 0,1 |
| | | Another additive | Cell controlling agent: parts by mass | 0,05 | 0,05 | 0,05 | 0,05 | 0,05 | 0,05 |
| | | | Conduct ive carbon material: parts by mass | - | - | - | - | - | - |
| | | Phenolic antioxidant/NOR type hindered amine-based compound | | 0,03 | 0,02 | 0,03 | 0,03 | 0,05 | 0,03 |
| | | Sulfur-based antioxidant/NOR type hindered amine-based compound | | 0,03 | 0,02 | 0,03 | 0,03 | 0,05 | 0,03 |
| | Total amount (mass%) of phosphonate ester blended in 100 mass% of resin beads | | | 13,0 | 13,0 | 15,0 | 18,0 | 2,7 | 6,3 |
| | Total amount (mass%) of NOR type hindered amine-based compound blended in 100 mass% of resin beads | | | 3,0 | 5,0 | 3,0 | 3,0 | 1,8 | 3,6 |
| | NOR type hindered amine-based compound/phosphonate ester | | | 0,23 | 0,38 | 0,20 | 0,17 | 0,68 | 0,57 |
| | Foamed layer (parts by mass) : Covering layer (parts by mass) | | | - | - | - | - | - | - |
| | Resin bead length (mm) | | | 2,0 | 2,0 | 2,0 | 2,0 | 2,0 | 2,0 |
| | Average of long diameter of cut surface/short diameter of cut surface | | | 1,6 | 2,0 | 2,2 | 2,9 | 1,2 | 1,5 |
| Expanded beads | Expansion temperature (°C) | | | 153 | 153 | 153 | 153 | 154 | 153 |
| | Expansion pressure (MPa(G)) | | | 1,2 | 1,2 | 1,2 | 1,2 | 1,2 | 1,1 |
| | Heat of fusion at high-temperature peak (J/g) | | | 14 | 14 | 14 | 14 | 12 | 14 |
| | Bulk density (kg/m³) | | | 73 | 50 | 64 | 59 | 102 | 95 |
| | Closed cell rate (%) | | | 54 | 50 | 53 | 48 | 82 | 56 |
| | Average of long diameter of expanded beads/short diameter of expanded beads | | | 2,8 | 3,6 | 3,3 | 3,1 | 1,5 | 2,5 |
| Expanded beads molded article | Molding pressure (MPa(G)) | | | 0,36 | 0,36 | 0,36 | 0,32 | 0,32 | 0,32 |
| | Density (kg/m³) | | | 115 | 70 | 90 | 80 | 120 | 115 |
| | Fusion-bonding property | | | C | C | C | C | B | C |
| | Surface property | | | Bad | Bad | Bad | Bad | Good | Bad |
| | UL 94 V test rating | | | V-2 | V-2 | V-0 | V-0 | Failure | V-2 |

The present invention described above includes the following technical concepts.
(1) Polyolefin-based resin expanded beads including a foamed layer,
   the foamed layer including a base material resin constituted of a polyolefin-based resin, the foamed layer containing a phosphonate ester-based compound and a NOR type hindered amine-based compound, wherein
   an amount of the phosphonate ester-based compound blended in the foamed layer is 5 parts by mass or more and 25 parts by mass or less with respect to 100 parts by mass of the base material resin, and an amount of the NOR type hindered amine-based compound blended in the foamed layer is 0.3 parts by mass or more and 5 parts by mass or less with respect to 100 parts by mass of the base material resin,
   the polyolefin-based resin expanded beads having a closed cell rate of 60% or more.
(2) The polyolefin-based resin expanded beads according to (1), having an average ratio of a long diameter to a short diameter (long diameter/short diameter) of 1.0 or more and 2.0 or less.
(3) The polyolefin-based resin expanded beads according to (1) or (2), including a covering layer covering the foamed layer, wherein a mass ratio of the foamed layer to the covering layer is 95 : 5 to 70 : 30.
(4) The polyolefin-based resin expanded beads according to any one of (1) to (3), wherein in the foamed layer, a ratio of the amount of the NOR type hindered amine-based compound blended to the amount of the phosphonate ester-based compound blended is 0.04 or more and 0.4 or less.
(5) The polyolefin-based resin expanded beads according to any one of (1) to (4), wherein the base material resin of the foamed layer is constituted of a linear polypropylene-based resin (A) and a branched polypropylene-based resin (B) having a melt tension of 50 mN or more and/or a polyethylene-based resin (C) having a melt flow rate (MFR) of 3 g/10 min or less, the melt tension measured under a condition of 230°C, the MFR measured under a condition of a temperature of 190°C and a load of 2.16 kg, and a total content of the branched polypropylene-based resin (B) and the polyethylene-based resin (C) is 5 mass% or more and 30 mass% or less with respect to 100 mass% of a total content of the linear polypropylene-based resin (A), the branched polypropylene-based resin (B), and the polyethylene-based resin (C).
(6) The polyolefin-based resin expanded beads according to any one of (1) to (5), wherein the foamed layer contains a conductive carbon material, and an amount of the conductive carbon material blended in the foamed layer is 1 part by mass or more and 10 parts by mass or less with respect to 100 parts by mass of the base material resin.
(7) The polyolefin-based resin expanded beads according to any one of (1) to (6), wherein in the foamed layer, the foamed layer contains a phenolic antioxidant, an amount of the phenolic antioxidant blended in the foamed layer is 0.01 parts by mass or more and 0.5 parts by mass or less with respect to 100 parts by mass of the base material resin of the foamed layer, and
   a ratio of the amount of the phenolic antioxidant blended to the amount of the NOR type hindered amine-based compound blended is 0.03 or more and 0.9 or less.
(8) The polyolefin-based resin expanded beads according to any one of (1) to (7), wherein the foamed layer contains a sulfur-based antioxidant, an amount of the sulfur-based antioxidant blended in the foamed layer is 0.01 parts by mass or more and 0.5 parts by mass or less with respect to 100 parts by mass of the base material resin of the foamed layer, and
   a ratio of the amount of the sulfur-based antioxidant blended to the amount of the NOR type hindered amine-based compound blended is 0.03 or more and 0.9 or less.
(9) An expanded beads molded article, obtained by in-mold molding of the polyolefin-based resin expanded beads according to any one of (1) to (8).

## Claims

1. Polyolefin-based resin expanded beads comprising a foamed layer,
the foamed layer including a base material resin constituted of a polyolefin-based resin, the foamed layer containing a phosphonate ester-based compound and a NOR type hindered amine-based compound, wherein
an amount of the phosphonate ester-based compound blended in the foamed layer is 5 parts by mass or more and 25 parts by mass or less with respect to 100 parts by mass of the base material resin, and an amount of the NOR type hindered amine-based compound blended in the foamed layer is 0.3 parts by mass or more and 5 parts by mass or less with respect to 100 parts by mass of the base material resin,
the polyolefin-based resin expanded beads having a closed cell rate of 60% or more.

2. The polyolefin-based resin expanded beads according to claim 1, having an average ratio of a long diameter to a short diameter (long diameter/short diameter) of 1.0 or more and 2.0 or less.

3. The polyolefin-based resin expanded beads according to claim 1 or 2, including a covering layer covering the foamed layer, wherein a mass ratio of the foamed layer to the covering layer is 95 : 5 to 70 : 30.

4. The polyolefin-based resin expanded beads according to any one of claims 1 to 3, wherein in the foamed layer, a ratio of the amount of the NOR type hindered amine-based compound blended to the amount of the phosphonate ester-based compound blended is 0.04 or more and 0.4 or less.

5. The polyolefin-based resin expanded beads according to any one of claims 1 to 4, wherein the base material resin of the foamed layer is constituted of a linear polypropylene-based resin (A) and a branched polypropylene-based resin (B) having a melt tension of 50 mN or more and/or a polyethylene-based resin (C) having a melt flow rate (MFR) of 3 g/10 min or less, the melt tension measured under a condition of 230°C, the MFR measured under a condition of a temperature of 190°C and a load of 2.16 kg, and a total content of the branched polypropylene-based resin (B) and the polyethylene-based resin (C) is 5 mass% or more and 30 mass% or less with respect to 100 mass% of a total content of the linear polypropylene-based resin (A), the branched polypropylene-based resin (B), and the polyethylene-based resin (C).

6. The polyolefin-based resin expanded beads according to any one of claims 1 to 5, wherein the foamed layer contains a conductive carbon material, and an amount of the conductive carbon material blended in the foamed layer is 1 part by mass or more and 10 parts by mass or less with respect to 100 parts by mass of the base material resin.

7. The polyolefin-based resin expanded beads according to any one of claims 1 to 6, wherein the foamed layer contains a phenolic antioxidant, an amount of the phenolic antioxidant blended in the foamed layer is 0.01 parts by mass or more and 0.5 parts by mass or less with respect to 100 parts by mass of the base material resin of the foamed layer, and
in the foamed layer, a ratio of the amount of the phenolic antioxidant blended to the amount of the NOR type hindered amine-based compound blended is 0.03 or more and 0.9 or less.

8. The polyolefin-based resin expanded beads according to any one of claims 1 to 7, wherein the foamed layer contains a sulfur-based antioxidant, an amount of the sulfur-based antioxidant blended in the foamed layer is 0.01 parts by mass or more and 0.5 parts by mass or less with respect to 100 parts by mass of the base material resin of the foamed layer, and
in the foamed layer, a ratio of the amount of the sulfur-based antioxidant blended to the amount of the NOR type hindered amine-based compound blended is 0.03 or more and 0.9 or less.

9. An expanded beads molded article, obtained by in-mold molding of the polyolefin-based resin expanded beads according to any one of claims 1 to 8.
